# EUROPÄISCHE PATENTSCHRIFT

(11) **EP 4 554 325 B1**
(45) Veröffentlichungstag und Bekanntmachung des Hinweises auf die Patenterteilung: **18.11.2026**
(21) Anmeldenummer: 24211062.5
(22) Anmeldetag: 06.11.2024
(51) Int. Cl.: H05B 3/00, A47J 37/06

(54) **HANDGEFÜHRTE VORRICHTUNG ZUM ÜBERBACKEN VON LEBENSMITTELPRODUKTEN**
HAND-HELD DEVICE FOR BAKING FOOD PRODUCTS
DISPOSITIF MANUEL POUR CUIRE DES PRODUITS ALIMENTAIRES

(30) Priorität: 08.11.2023 DE 202023106529 U
(43) Veröffentlichungstag der Anmeldung: 14.05.2025
(73) Patentinhaber: Malischewski, Mathias, 18190 Sanitz (DE)
(72) Erfinder: Malischewski, Mathias, 18190 Sanitz (DE)
(74) Vertreter: Grünbaum, Annekathrin

(56) Entgegenhaltungen:
- EP-A1- 3 261 407
- CN-A- 102 362 787
- CN-A- 110 754 964
- DE-U1- 202023 106 528
- DE-U1- 202023 106 529
- ANONYMOUS: "Grillrost aus Baustahl??? | Grillforum und BBQ", 5 June 2013 (2013-06-05), www.grillsportverein.de, pages 1 - 18, XP093251201, Retrieved from the Internet <URL:https://www.grillsportverein.de/forum/threads/grillrost-aus-baustahl.191018/> [retrieved on 20250217]
- ANONYMOUS: "Infrarotstrahler", 13 October 2023 (2023-10-13), Wikipedia, pages 1 - 12, XP093251268, Retrieved from the Internet <URL:https://de.wikipedia.org/w/index.php?title=Infrarotstrahler&oldid=238104363> [retrieved on 20250217]
- ANONYMOUS: "Carbon Fiber Heating Lamp Tube Heating Oven Baking Lamp Tube Infrared Equipment Car Paint Light Tube (1KW 600mm)", 13 September 2022 (2022-09-13), Amazon.com, pages 1 - 6, XP093251296, Retrieved from the Internet <URL:https://www.amazon.com/Carbon-Heating-Lamp-Infrared-Equipment/dp/B0BF5G4SQD> [retrieved on 20250217]

## Beschreibung

Die Erfindung betrifft eine handgeführte Vorrichtung zum Überbacken von Lebensmittelprodukten. Aus dem Stand der Technik sind unterschiedlichste Formen der Veredelung von Lebensmittelprodukten bekannt, wobei eine Veredelung u.a. durch das Bräunen einer Oberfläche und/oder dem Rösten des Lebensmittelproduktes erfolgen kann.

Eine Untergruppe der Vorrichtungen zum Veredeln von Nahrungsmitteln nach dem Stand der Technik sind solche Vorrichtungen, die dem Überschmelzen und/oder Überbacken von Lebensmittelprodukten mit Käse dienen.

Hierbei sind der Natur des zu überschmelzenden und/oder zu überbackenden Lebensmittelprodukts keine Grenzen gesetzt. Besonderer Beliebtheit erfreuen sich beim Überbacken beispielsweise Nachos sowie kleinere Portionen von Gemüse oder Fleisch als Snack. Ferner beliebt ist mit Käse überbackenes Brot, beispielsweise zum Abendbrot.

Zum Überbacken von Lebensmittelprodukten im Allgemeinem sind dem Stand der Technik verschiedene Vorrichtungen bekannt.

Neben im Wesentlichen ortsfesten Vorrichtungen, beispielsweise allgemein bekannten Backöfen, bei welchen eine an der Backofendecke montierte unverdeckte Heizwendel während der Grillfunktion ein Überbacken und eine anschließende Bräunung des Lebensmittelproduktes ermöglicht, existieren ebenso ortsveränderliche Vorrichtungen, wie beispielsweise Salamander oder Raclette Grills.

WO2011139805A1 offenbart ein Gerät zur Lebensmittelveredelung der umfassend einen Lebensmittelveredelungshohlraum, der eine Öffnung aufweist, durch die das zu veredelnde Lebensmittelprodukt eingeführt und entnommen wird. Im Lebensmittelveredelungshohlraum ist ein Infrarot-Gasheizer angeordnet. Eine Steuerschaltung schaltet den Infrarot-Gasheizer ein und startet ein Endzeitintervall und schaltet den Infrarot-Gasheizer aus, wenn das Endzeitintervall endet. Der Infrarot-Gasheizer verbraucht nur während des Endzeitintervalls Energie. Hierfür bedarf es Wechselstrom von einem Stromnetz oder einem Generator.

CH562598A5 offenbart ein tragbares, elektrisch beheiztes Infrarot-Grillgerät insbesondere zum Schmelzen von Käse, das gekennzeichnet ist durch einen sockelförmigen Unterteil, über welchem mittels eines Tragelementes ein einen elektrisch beheizten Heizkörper aufweisender Oberteil unter Freilassung eines Zwischenraumes zwischen Unter- und Oberteil angeordnet ist, wobei durch das Aufstellen eines Tellers auf den Unterteil Schaltmittel betätigbar sind, welche bewirken, dass der elektrische Heizkörper nur dann einschaltbar ist, wenn sich ein Teller auf dem Unterteil befindet. Das Gerät weist ein Kabel für einen Netzanschluss auf.

EP3936011A1 offenbart Schmelzvorrichtung zum Schmelzen eines Käses, wobei die Schmelzvorrichtung einen Gehäuseboden, einen Käseträger mit einer Auflageeinheit zum Auflegen des Käses und ein Heizelement zum Schmelzen des Käses aufweist, wobei der Käseträger und Heizelement am und/oder auf dem Gehäuseboden angeordnet sind und der Käseträger fixiert ist. Der Heizstrahler wird mit einem Netzanschlusskabel verbunden.

EP251539A1 offenbart eine Vorrichtung zum Grillen oder Bräunen von Lebensmitteln, wobei die Vorrichtung eine oder mehrere Lampen aufweist, die Infrarotstrahlung emittieren. Die Lampen sind so positioniert sind, dass sie einen Bereich bestrahlen, in dem zu grillende oder zu bräunende Lebensmittel platziert werden können. Eine Abschirmeinrichtung zwischen der Lampe oder den Lampen und dem Grillbereich ist dadurch gekennzeichnet, dass die Abschirmeinrichtung aus einem metallischen Material besteht, das darin Öffnungen aufweist und so konfiguriert ist, dass es eine im Wesentlichen gleichmäßige Verteilung der Intensität der Infrarotstrahlung über im Wesentlichen den gesamten Grillbereich bereitstellt. Die Vorrichtung weist einen elektrischen Anschluss für den Anschluss an eine elektrische Stromversorgung auf.

US11131462B2 offenbart ein System und ein Verfahren für einen Knusperstab. Das System und Verfahren für den Knusperstab umfasst einen Heizkopf mit einer Heizeinheit und einen Griff mit einem Stromanschluss. Die Heizbaugruppe hat eine Stützstruktur, ein Schutzgitter, ein Heizelement und ein Gebläse, die in funktionaler Kombination zusammenarbeiten, um erhitzte Luft auf eine Oberfläche, wie z. B. eine Arbeitsplatte, zu projizieren und Lebensmittel darauf zu knuspern. Der Heizkopf umfasst auch eine Benutzerschnittstelle, die es dem Benutzer ermöglicht, das Heizelement und das Gebläse so zu programmieren, dass sie erhitzte Luft mit einer voreingestellten Temperatur als Mittel zum Erhitzen von Lebensmitteln abgeben.

EP4052622A1 offenbart ein Hand-Grillgerät zum Gratinieren, Rösten und Grillen umfassend ein Gehäuse, einen Heizstrahler ein Rohr und einen Griff, und die Verwendung eines solchen Hand-Grillgeräts zum Grillen von Grillgut, Rösten von Nüssen oder Gratinieren einer Speise. Eine entsprechende Energieversorgung erfolgt über einen Gasanschluss.

CH337588A offenbart eine handgeführte Vorrichtung zum Gratinieren von Speisen, die über ein Kabel mit dem Stromnetz verbunden ist.

DE1905679U offenbart eine großflächige Vorrichtung zum Überbacken von Speisen, bestehend aus einem im Wesentlichen kreisrunden, an einer Breitseite offenen Gehäuseteil mit Handgriff und Füßen, durch welche die Gehäusedecke in einem bestimmten Abstand über der Speise gehalten wird, und aus einer unter der Gehäusedecke derart angebrachten elektrischen Einrichtung zur Wärmeerzeugung, dass die Wärme zur offenen Gehäuseseite hin abstrahlt. Ein externer Stromanschluss ist vorgesehen.

CN202287902U offenbart einen handgehaltenen, schnell aufheizbaren Brotbackautomaten, der dadurch gekennzeichnet ist, dass er mit einem Handgriff ausgestattet ist. Das hintere Ende des Griffs ist nach außen verlängert, um mit einem Stromkabel einer Wechselstromquelle verbunden zu werden. Ein Heizmechanismus ist mit dem vorderen Ende des Griffs verbunden. Der Heizmechanismus ist als Hohlkörper mit einer Öffnung am vorderen Ende geformt, in welche das zu backende Brot eingeführt werden kann, wobei auch ein überbacken eines bereits fertig gebackenen Brots erfolgen kann.

CN 110 754 964 A offenbart einen tragbaren Elektroherd. Der tragbare Elektroherd umfasst eine Heizkomponente und eine Haltekomponente, wobei die Heizkomponente eine Wärmeisolationshülle, einen Strahlungsheizkörper und eine reflektierende Abdeckung umfasst und der Strahlungsheizkörper in der Wärmeisolationshülle angeordnet ist.

CN 102 362 787 A offenbart einen handlichen Schnellbrotbackautomaten. Der Brotbackautomat ist dadurch gekennzeichnet, dass er einen Handgriff umfasst, wobei das hintere Ende des Handgriffs nach außen ragt und mit einem Stromkabel einer Wechselstromquelle verbunden ist, das vordere Ende des Handgriffs mit einem Heizmechanismus verbunden ist, der Heizmechanismus einen hohlen Körper mit einer vorderen Öffnung aufweist, ein Heizband in der Nähe der vorderen Öffnung angeordnet ist und eine Backfläche, die für Brot geeignet ist, an der vorderen Öffnung angeordnet ist.

DE 20 2023 106529 U offenbart eine handgeführte Vorrichtung zum Überbacken von Lebensmittelprodukten, welche sehr kompakt, mobil, leistungsfähig, energieeffizient und unabhängig von einer externen Stromquelle zu betreiben ist.

Sowohl ortsfeste als auch ortveränderliche Vorrichtungen zur Veredelung von Lebensmittelprodukten mit Käse gemäß dem Stand der Technik leiden an inhärenten Problemen.

Die im Wesentlichen ortsfesten Vorrichtungen sind durch ihre Größe schlichtweg nicht mobil, sodass eine Veredelung des Lebensmittelprodukts der Wahl ausschließlich am Installationsort, beispielsweise der Küche, erfolgen kann. Der Konsument muss demnach das Lebensmittelprodukt in der Küche veredeln, während er beispielsweise mit Gästen und/oder Familie im Esszimmer auf die Fertigstellung wartet. Sodann muss das veredelte Lebensmittelprodukt aus der Küche zum Verzehr in das Esszimmer transportiert werden. Hier können kleinere Portionen direkt verzehrt werden, sodass es einen abermaligen Veredelungsvorgang in der Küche bedarf, um auf den Punkt zubereitete Lebensmittelprodukte zu servieren. Größere Portionen kühlen schnell ab und/oder das Lebensmittelprodukt, beispielsweise ein krosses Brot, weicht unter dem Käse auf, oder der Genuss wird in anderer Weise negativ beeinträchtigt. Beide Optionen führen zu einem sozial und/oder organoleptisch suboptimalen Ergebnis.

Die handgeführten Vorrichtungen weisen eine großflächige Duschkopf-ähnliche Formgebung auf. Sie benötigen demnach eine relativ große Fläche zur kurzfristigen Ablage, zum einen während der Anwendung, beispielsweise am üppig gedeckten Abendbrottisch, und zum anderen während der längerfristigen Lagerung im Haushalt, welcher an einer zunehmenden Anzahl an platzintensiven Küchengeräten und -utensilien leidet.

Vorrichtungen gemäß dem Stand der Technik erzielen entweder keine, oder nur sehr langsam eine unzureichende Bräunung beim Überbacken, und somit keine oftmals gewünschte knusprige Kruste. Dies gilt sowohl für ortsfeste Vorrichtung, z.B. eine Mikrowelle oder ein Backofen, als auch für mobile Geräte mit begrenzter Leistung.

Ferner ist aus dem Stand der Technik keine mobile Vorrichtung zum Überbacken von Lebensmittelprodukten bekannt, welche energieeffizient genug wäre, einen Betrieb unter Verwendung einer internen Stromquelle unabhängig von der Verfügbarkeit von Netzstrom und/oder einer anderen externen Energiequelle zu ermöglichen. Zudem ist ein Netzkabel/eine Gasleitung für die Zubereitung am Tisch störend, benötigt Zeit für das Aus- und Einrollen, schmälert den Anblick in schönem Ambiente und birgt auf Grund der Stolpergefahr ein nicht zu verachtendes Sicherheitsrisiko während dem Führen eines heißen Gerätes.

Es ist demnach wünschenswert über eine leistungsfähige, energieeffiziente mobile Vorrichtung zum Überbacken von Lebensmitteln zu verfügen, welche bequem mit einer Hand bewegbar, transportierbar und auf einem Tisch o.ä. absetzbar ist, ohne hierbei eine große Fläche zu beanspruchen.

### Darstellung der Erfindung

Es ist Aufgabe der Erfindung die Nachteile des Standes der Technik zu beseitigen und eine handgeführte Vorrichtung zum Überbacken von Lebensmittelprodukten bereitzustellen, welche sehr kompakt, mobil, leistungsfähig, energieeffizient und unabhängig von einer externen Stromquelle zu betreiben ist.

Die Lösung dieser Aufgabe erfolgt durch die in den Ansprüchen aufgeführten Merkmale.

Die Lösung der Aufgabe erfolgt durch eine handgeführte Vorrichtung zum Überbacken von Lebensmittelprodukten mittels einer Kombination von Wärmestrahlung und Heißluft, wobei die handgeführte Vorrichtung ein Gehäuse, ein Energieversorgungssystem und ein Heizsystem aufweist. Das Energieversorgungssystem weist zumindest einen Akkumulator auf und ist mit dem Heizsystem elektrisch verbunden. Das Heizsystem weist zumindest ein Heizelement, zumindest ein transmittierendes Element und zumindest einen Reflektor auf. Der zumindest eine Reflektor ist derart angeordnet, dass er Wärmestrahlung des zumindest einen Heizelements in Richtung des zumindest einen transmittierenden Elements reflektiert. Die handgeführte Vorrichtung weist eine Länge auf, welche mindestens einer doppelten maximalen Breite der handgeführten Vorrichtung entspricht. Das zumindest eine transmittierende Element ist an einer Außenfläche des Gehäuses angeordnet. Die handgeführte Vorrichtung zum Überbacken von Lebensmittelprodukten weist ferner ein Thermomanagementsystem auf. Das Thermomanagementsystem umfasst einer Lüfter.

Der Lüfter ist auf der dem zumindest einen Heizelement gegenüberliegenden Seite des zumindest einen Reflektors angeordnet oder ein Laufrad des Lüfters ist innerhalb des zumindest einen Reflektors angeordnet. Die Außenfläche des Gehäuses, an welcher das zumindest eine transmittierende Element angeordnet ist, weist zumindest eine erste von Luft durchströmbare Öffnungauf. Die zumindest eine erste von Luft durchströmbare Öffnung fungiert als Luftauslass für den Lüfter.

Das Gehäuse der handgeführten Vorrichtung zum Überbacken von Lebensmittelprodukten dient als Schutz gegenüber Schäden verbauter Hardware, beispielsweise gegenüber Schäden am Akkumulator (Akku). Hierfür kann das Gehäuse aus allen gängigen Materialien, beispielsweise Kunststoff, gefertigt sein. Das Gehäuse der handgeführten Vorrichtung kann aber auch ein robustes Metallgehäuse darstellen, welches, im unwahrscheinlichen Fall von Akkuschäden, als Brandschutz dient. Hierfür kann das Gehäuse einen Abbrand in kontrollierter Umgebung ermöglichen. Ferner können Sollbruchventile vorgesehen sein, aus denen Flammen kontrolliert nach oben aussteigen können.

In vorteilhafter Ausführung ist das Gehäuse im Wesentlichen als Kreiszylinder ausgeformt. Eine Ausführung in Form eines Kreiszylinders resultiert in einer ergonomischen Form, welche für eine handgeführte Vorrichtung wesentlich ist. Auch in diesem Sinne weist die Vorrichtung eine Länge auf, welche mindestens der doppelten maximalen Breite der Vorrichtung entspricht. Eine breitere handgeführte Vorrichtung würde eine direkte Sicht eines Nutzers auf das zu überbackene Lebensmittelprodukt verdecken und einer zielgerichteten Anwendung damit im Wege stehen. Ebenfalls erlaubt eine längliche Ausgestaltung der handgeführten Vorrichtung ein platzsparendes Verstauen der handgeführten Vorrichtung, da zum Abstellen nur eine kleine Grundfläche benötigt wird, wie beispielsweise bei einer Pfeffermühle. Hierfür muss das Gehäuse nicht zwangsläufig einem idealen Kreiszylinder entsprechen. Ein Gehäusequerschnitt kann beispielsweise auch einem Viereck oder einem Vieleck entsprechen, wobei abgerundete Ecken im Sinne der Ergonomie vorteilhaft sind. Hierbei kann sich ein Gehäusedurchmesser über die Länge der Vorrichtung auch ändern. Beispielsweise kann das Gehäuse im Bereich des Heizsystems breiter sein als andernorts, wie später in einem Ausführungsbeispiel erläutert wird. Dies führt u.a. zu einer Vergrößerung der Grundfläche und erhöht eine Standfestigkeit der Vorrichtung. Die Vorrichtung kann auch in einem zentralen Abschnitt hantelförmig verjüngt sein, um die Ergonomie zu verbessern.

Das Gehäuse kann ferner Griffmulden und/oder ein beweglich gelagertes Griffelement aufweisen. Eine Ausführung unter Einbezug von Griffmulden resultiert in einer ergonomischen Form, welche für eine handgeführte Vorrichtung wesentlich ist. So kann die handgeführte Vorrichtung sicher gegriffen und verwendet werden. Unter Verwendung eines Klappscharniers am Gehäuse kann ein beweglich gelagertes Griffelement vorgesehen sein. Im eingeklappten Zustand wird somit weiterhin eine platzsparende Verwahrung ermöglicht. Im ausgeklappten Zustand kann das Griffelement zur Handführung der Vorrichtung verwendet werden, und erlaubt es somit das Gehäuse, sofern es vollständig aus gut wärmeleitendem Metall gefertigt ist, effizienter über die gesamte Länge als Kühlkörper einzusetzen, da dieses eine höhere Temperatur annehmen kann, wenn es nicht zur Handführung der Vorrichtung verwendet wird. Auch möglich ist ein metallisches Gehäuse, bei welchen zumindest der Griffbereich mit einem Kunststoff über zogen ist.

Das Gehäuse kann ferner Aufnahmeelemente aufweisen. Aufnahmeelemente können in Form von Ösen, Einkerbungen oder ähnlichen Elementen vorgesehen sein, welche mit entsprechenden Ablageelementen einer Haltevorrichtung, beispielsweise eines Metallgestells, korrespondieren. Dies ermöglicht es, ein Lebensmittelprodukt unter der handgeführten Vorrichtung zu platzieren und dies in einem Dauerbetrieb der Vorrichtung zu Überbacken, Braten, Garen etc., ohne das hierfür ein permanentes Halten in der Hand notwendig ist.

Die Außenfläche des Gehäuses, an welcher das zumindest eine transmittierende Element angeordnet ist, kann eine Grund- oder Seitenfläche des Gehäuses, beispielsweise eine Mantelfläche einer im Wesentlichen zylindrisch ausgestalteten handgeführten Vorrichtung, sein. Das Heizsystem ist so anzuordnen bzw. zu gestalten, dass Wärmestrahlung in die entsprechende Richtung emittiert wird.

Der zumindest eine Reflektor kann als separates Bauteil gebildet sein. Der zumindest eine Reflektor kann aber auch Bestandteil des zumindest einen Heizelements sein, beispielsweise in Form einer Beschichtung auf einem Glaskörper des zumindest einen Heizelements.

Das zumindest eine transmittierende Element erhitzt sich im Betrieb und ist für höhere Temperaturen ausgelegt. Um bei Berührung nach Betrieb vor Verbrennungen zu schützen ist es wünschenswert, dass sich das zumindest eine transmittierende Element schnell abkühlt. Dabei können u.a. Standfüße helfen, indem eine Luftzirkulation unter dem Gerät nach dem Abstellen ermöglicht wird, sofern das zumindest eine transmittierende Element Bestandteil einer entsprechenden Stellfläche sein sollte.

Das zumindest eine transmittierende Element kann beispielsweise in Form einer Scheibe, in Form einer Röhre, in Form eines Kugelsegments oder in jeder anderen zweckdienlichen Gestaltung ausgebildet sein.

Das Gehäuse kann einteilig oder mehrteilig ausgestaltet sein. Eine mehrteilige Ausgestaltung des Gehäuses erhöht hierbei die Flexibilität der handgeführten Vorrichtung. Beispielsweise kann das Energieversorgungssystem, welches den zumindest einen Akkumulator aufweist, als eigenständige und vom Rest der Vorrichtung lösbare Einheit ausgestaltet sein, wie später in einem Ausführungsbeispiel beschrieben wird. Dies ermöglicht es beispielsweise, einen entladenen gegen einen geladenen Akkumulator auszutauschen, um eine fortwährende Benutzung zu gewährleisten. Auch ermöglicht dies den einfachen Austausch eines defekten Akkumulators. Ferner kann auch der Teil der Vorrichtung, welcher das Heizsystem aufweist, als eigenständige und vom Rest der Vorrichtung lösbare Einheit ausgestaltet sein. Dies ermöglicht es beispielsweise auf einfache Art und Weise das zur Anwendung kommende Heizelement entsprechend einer avisierten Nutzung auszutauschen. Beispielsweise kann für einen Backvorgang ein Halogenstrahler gegen einen Heizdraht getauscht werden, ohne hierfür am Heizsystem selbst einen Wechsel vornehmen zu müssen.

Die Vorrichtung kann einen Auslösemechanismus aufweisen, welcher in einfachster Variante ein Schaltelement sein kann, welches ein- und ausrastet. In vorteilhafter Ausführung ist der Auslösemechanismus derart ausgestaltet, dass er eine Kindersicherung aufweist. Beispielsweise müssen zum Auslösen zwei Schalter gleichzeitig betätigt werden. Ebenfalls vorstellbar ist die Integration einer Steuereinheit mit Touch-Pad, welche die Eingabe eines Codes verlangt.

Eine Auslösung der handgeführten Vorrichtung zum Überbacken von Lebensmittelprodukten kann mittels eines Start/Stop Schalters oder eines Tasters mit optionalem Zeitschalter erfolgen. Eine erste Betätigung des Start/Stop Tasters mit Zeitschalter bewirkt beispielsweise ein Aufheizen des zumindest einen Heizelements. Hierbei kann die Zeitspanne wählbar sein, beispielsweise mittels eines Drehknopfs oder Steuerfeldes, um eine Brenndauer des zumindest einen Heizelements anzupassen, beispielsweise in Abhängigkeit einer Außentemperatur, einer Dicke des Käses und der Käsesorte, welche zum Überbacken verwendet wird. Eine zweite Betätigung des Start/Stop Tasters kann ein Aufheizen des zumindest einen Heizelements vorzeitig vor dem Zeitschalter beenden. Auch kann das Aufheizen unterbrochen werden, wenn ein Temperatursensor, beispielsweise ein Temperatursensor des Heizsystems oder ein Temperatursensor des Energieversorgungssystems, einen vordefinierten Wert überschreitet (Überhitzungsschutz).

Das Heizsystem und/oder das Energieversorgungssystem und/oder das Gehäuse der handgeführten Vorrichtung zum Überbacken von Lebensmittelprodukten kann/können mindestens einen Temperatursensor aufweisen, welcher/welche mit dem Heizelement wirkverbunden ist/sind. Der oder die Temperatursensoren können als Temperaturschalter, beispielsweise in Form eines Bimetallschalters, ausgebildet sein, welcher einen Stromkreis direkt beim Erreichen einer definierten maximalen Temperatur unterbricht. Hierfür kann der Temperaturschalter beispielsweise direkt in einem Leistungsstromkreis des zumindest einen Heizelements oder im Steuerstrom an einem Hochsetzsteller oder MOSFET oder Zeitschalter eingebunden sein. Der oder die Temperatursensoren können auch als Widerstandsthermometer mit z.B. Pt100 Sensor ausgebildet sein, welche mit einer (digitalen) Signalverarbeitung in einem Steuerelement oder Mircocomputer kommunizieren, welcher Steuerströme an den Leistungsstromkreis sendet.

Das Energieversorgungssystem kann ein Batteriemanagementsystem und/oder eine Ladebuchse, und/oder einen Hochsetzsteller und/oder einen Tiefsetzsteller und/oder ein Schaltelement und/oder eine Sicherung und/oder eine Ladestandsanzeige und/oder ein Energiebereitstellungssystem aufweisen, welcher/welche mit dem zumindest einen Akkumulator wirkverbunden ist/sind. Das Energiebereitstellungsystem ermöglicht es die erfindungsgemäße Vorrichtung als Powerbank zu verwenden, indem elektrische Energie an externe Geräte abgegeben werden kann um diese aufzuladen.

Der Tiefsetzsteller oder Hochsetzsteller dient einer konstanten Leistungsabgabe. Eine Spannung herkömmlicher Li-Akkumulatoren nimmt von voll nach leer ab (4,2 V - 2,5 V). Hierbei sinkt ein Leistungsverlust quadratisch mit einem Spannungsabfall, wobei eine konstante Leistung erwünscht ist. Hierfür wird mittels eines Tiefsetzstellers die Spannung konstant auf ca. 3 V nach unten gesetzt. Im Falle eines Hochsetzstellers wird die Spannung konstant auf einen Wert von über 4,2V gewandelt. Das Batteriemanagementsystem kann eine Temperaturüberwachung des zumindest einen Akkumulators sowie einen Raum nahe des Heizsystems umfassen. Eine Abschaltung der Vorrichtung kann erfolgen, sobald ein definierter Temperatursollwert überschritten wurde. Ferner kann das Batteriemanagementsystem eine klassische Sicherung gegen zu hohe Ströme des zumindest einen Akkumulators umfassen. Das Schaltelement trennt Verbraucher der Vorrichtung von einer elektrischen Energieversorgung. Die Sicherung dient als Schutzschaltung gegen Überlast.

Vorteilhafterweise weist die handgeführte Vorrichtung eine Nennspannung des zumindest einen Akkumulators von > 20 V auf, um Ströme auf einer Eingangsseite eines etwaigen Hochsetzstellers nicht über 20 A steigen zu lassen. Dadurch sind Bauteile einer Leistungselektronik kompakter und kostengünstiger auslegbar. Hierfür können mindestens sechs Li-Ion Zellen (6 x 3,7 V=22,2 V) vorgesehen sein, um bei minimal avisierten 300 - 400 W Leistung und resultierendem Spannungseinbruch nicht über 20 A zu kommen, was entsprechende Bauteile (wie Akkus und Schalter) teuer und die zu verwendenden Kabel dicker machen würde. Trotz höherer Akkuspannung von > 20 V soll kein extra Ladegerät benötigt werden, sondern vorteilhafterweise eine Ladung mittels eines handelsüblichen USB-C 5 V - 20 V Anschlusses erfolgen. Hierfür kann ein in die handführbare Vorrichtung integrierter Hochsetzsteller (USB Boost Line) verwendet werden. Dies ermöglicht einen Ladevorgang mit kleinen platzsparenden Ladegeräten, welche im Wesentlichen in jedem Haushalt, z.B. als Handyladegeräte, zur Verfügung stehen. Eine volle Ladung mit einer üblichen Leistung von bis zu 25 W kann ca. zwei bis sechs Stunden in Anspruch nehmen, was bei einem nächtlichen Ladevorgang einer Nutzungserfahrung nicht abträglich sein sollte. Vorteilhaft ist, dass kein extra Ladegerät benötigt wird und der Platzbedarf des Systems insgesamt minimiert ist, was ein wesentliches Ziel der Erfindung ist. Andere Ausführungen der Ladebuchse, beispielsweise als Micro- oder Mini-USB bzw. einer Buchse für Ladegräte höherer Spannungen, sind auch denkbar.

Auch der umgekehrte Weg als Powerbank zum Laden anderer Geräte mit 5V kann durch den zumindest einen Akkumulator, entsprechende Anschlüsse, z.B. USB und Hoch-/Tiefsetzsteller, ermöglicht werden. Der zumindest eine Akkumulator kann dabei wechselbar ausgeführt sein. Hierbei kann der Akku ein Standardakku gängiger Haushaltsgeräte, beispielsweise der eines Akkuschraubers, Stabmixer o.ä., sein, welche zunehmend austauschbar und geräteübergreifend kompatibel ausgebildet sind.

Eine Ladestandsanzeige ist eine Baukomponente, welche den Ladestand des zumindest einen Akkumulators wiedergibt. Diese kann entweder als Display, beispielsweise mittels eines Batteriesymbols und/oder einer einzelnen oder mehreren (mehrfarbigen) lichtemittierender Dioden und/oder akustisch oder auf eine andere geeignete Art und Weise ausgebildet sein. Ziel ist es, dem Nutzer über den Ladestand der Vorrichtung zum Überbacken von Lebensmittelprodukten zu informieren, sodass frühzeitig eine Ladung des zumindest einen Akkumulators erfolgen kann.

Gemäß verschiedener Ausführungsformen umfasst das Thermomanagementsystem ferner einen Hitzeschild und/oder einen Temperatursensor und/oder einen als gut wärmeleitendes, metallisches Gehäuse ausgebildeten Teil des Gehäuses und/oder eine gut wärmeleitende Verbindung von dem zumindest einen Reflektor zu einem als gut wärmeleitendes, metallisches Gehäuse ausgebildeten Teil des Gehäuses.

Das Thermomanagementsystem ist im einfachsten Fall lediglich ein passiver Schutz des Energieversorgungssystems, im Speziellen des zumindest einen Akkumulators sowie der damit verbundenen Leistungselektronik, vor Überhitzung. Hierfür kann das Thermomanagementsystem zumindest einen Hitzeschild, bestehend aus mindestens einer wärmeisolierenden Wandung, aufweisen, welches entlang eines Querschnitts der Vorrichtung zwischen dem Heizsystem und den weiteren Elementen der Vorrichtung angeordnet ist. Der Hitzeschild verhindert, dass sich die durch das Heizsystem generierte Verlustwärmestrahlung auf die weiteren Elemente überträgt, und diese negativ beeinflusst oder gar irreversibel schädigt. Ferner denkbar ist, dass das Heizsystem, oder Abschnitte davon, seitlich entlang seines Umfangs von einem Hitzeschild umgeben ist. Das Hitzeschild kann beispielsweise aus Alusilikatfaser oder Aerogel gebildet sein. Die Wärme, die trotz einer solchen Isolierung ins Gehäuse gelangt, kann über einen als gut wärmeleitendes, metallisches Gehäuse ausgebildeten Teil des Gehäuses verteilt werden.

Das Thermomanagementsystem ist erfindungsgemäß aktiv ausgebildet. Hierfür umfasst das Thermomanagementsystem einen oder mehrere Lüfter, vorzugsweise Axiallüfter, oberhalb des Heizsystems, welcher/welche das Heizsystem mit Luft umströmt/umströmen. Hierbei können im Gehäuse angeordnete Lüftungsschlitze oder Bohrungen einen Lufteinlass gewährleisten. Auf Höhe des Heizsystems über einen Umfang des Gehäuses angeordnete Schlitze oder Bohrungen können eine Abfuhr der Luft gewährleisten, sodass exzessive Wärme aus der handgeführten Vorrichtung zum Überbacken von Lebensmittelprodukten herausgeblasen werden kann. Auch ist es vorstellbar, den Lüfter für eine interne Luftzirkulation im Gehäuse einzusetzen, um die Verlustwärme von dem zumindest einen Reflektor möglichst schnell zur Kühlung an ein als gut wärmeleitendes, metallisches Gehäuse ausgebildeten Teil des Gehäuses zu bringen. Ferner denkbar ist eine Auslösung eines Lüftungsvorgangs basierend auf einer anderen als der Heizsystemtemperatur, beispielsweise in Abhängigkeit einer Temperatur des Energieversorgungssystems. Auch hierfür kann ein Temperatursensor vorgesehen sein. Sowohl der zumindest eine Akkumulator, als auch weitere elektronische Bauteile, beispielsweise ein Hochsetzsteller bzw. Tiefsetzsteller, entwickeln ebenfalls Wärme im Betrieb, die abgeführt werden muss. Dies ist ebenso passiv über gute Wärmeleitung an einen als gut wärmeleitendes, metallisches Gehäuse ausgebildeten Teil des Gehäuses und/oder über aktive Kühlung mittels zumindest eines Lüfters möglich.

Das Thermomanagementsystem kann zumindest einen als gut wärmeleitendes, metallisches Gehäuse ausgebildeten Teil des Gehäuses aufweisen. Das Heizsystem kühlt, indem Wärmestrahlung über den vorzugsweise als dickwandiges metallisches Gehäuse ausgebildeten Teil des Gehäuses über eine große Oberfläche nach außen weitergeleitet wird, und sodann über Konvektion an der Umgebung abkühlt. Die Wärmeabfuhr vom Heizsystem kann durch eine direkte, gut wärmeleitende Verbindung des zumindest einen Reflektors an das seitliche, metallische Gehäuse weiter verbessert werden. Eine gut wärmeleitende Anbindung kann beispielsweise durch metallische Strukturen mit großem Querschnitt realisiert werden, um Wärme möglichst effizient an äußere Oberflächen der Vorrichtung abzuleiten. Der als gut wärmeleitendes, metallisches Gehäuse ausgebildete Teil des Gehäuses weist vorzugsweise eine Aluminiumbasislegierung oder Kupferbasislegierung auf. Ferner weist es vorzugsweise eine mittlere Stärke von mind. 0,5 mm, vorzugsweise mind. 2,0 mm auf. Derartige dicke Wandstärken metallischen Materials weisen vorteilhafter Weise eine große Wärmekapazität auf. Neben einer effizienten Wärmeabfuhr ist ein weiterer Vorteil dicker Wandstärken eine langsame Erwärmung des Gehäuses. Dies ist im Speziellen von Vorteil, wenn das gesamte Gehäuse der Vorrichtung als gut wärmeleitendes, metallisches Gehäuse ausgebildet ist, da die Gefahr einer Verbrennung an einer Hand eines Nutzers hierdurch deutlich reduziert wird.

Gemäß verschiedener Ausführungsformen weist das Heizsystem an dem zumindest einen transmittierenden Element eine Leistungsdichte von mindestens 15W/cm² auf. Die handgeführte Vorrichtung weist einen Rauminhalt von maximal 1500 cm³ auf. Hierfür weist die Grundfläche der Vorrichtung beispielsweise eine Fläche von 50 cm² auf, während die Vorrichtung eine Länge von 30 cm aufweist. Vorteilhafterweise weist die handgeführte Vorrichtung einen Rauminhalt von maximal 1400 cm³, bevorzugt maximal 1300 cm³, bevorzugt maximal 1200 cm³, bevorzugt maximal 1100 cm³, bevorzugt maximal 1000 cm³, auf. Ein geringer Rauminhalt, insbesondere bei einer kleinen Grundfläche, resultiert in einer kompakten Vorrichtung mit geringem Platzbedarf.

Gemäß verschiedener Ausführungsformen weist das zumindest eine transmittierende Element einen thermischen Wärmeausdehnungskoeffizienten von unter 6*10⁻⁶ 1/K bei 300K auf. Besonders bevorzugt weist das zumindest eine transmittierende Element einen thermischen Wärmeausdehnungskoeffizienten von unter 5*10⁻⁶ 1/K, bevorzugt unter 4*10⁻⁶ 1/K, bevorzugt unter 1*10⁻⁶ 1/K (bei 300K) auf.

In vorteilhafter Weise weist das zumindest eine transmittierende Element einen sehr geringen thermischen Wärmeausdehnungskoeffizienten von unter 6*10⁻⁶ 1/K (bei 300K), wie bei Borosilikat-, Quarzglas oder Glaskeramik, auf. Glasähnliche Materialien, welche dieser Anforderung genügen, sind ebenfalls denkbar. Gläser mit einem höheren Wärmeausdehnungskoeffizienten, wie Kalk-Natron-Gläser (auch als Fensterglas bekannt), sind üblicherweise deutlich kostengünstiger, haben aber eine deutlich geringere Widerstandsfähigkeit gegen Temperaturwechsel und sind damit empfindlicher. Dies ist bei dieser Erfindung von besonderer Bedeutung, da sie wegen der hohen Effizienz schnelle (kurze) Aufheiz- und Abkühlzeiten hat. Das zumindest eine transmittierende Element dient einem Schutz des zumindest einen Heizelements, im Speziellen vor Fettspritzern, welche das zumindest eine Heizelement zum Bersten bringen könnten, aber auch bei Reinigung der Vorrichtung vor mechanischer Beschädigung weiterer Bestandteile des Heizsystems.

Gemäß verschiedener Ausführungsformen ist das zumindest eine Heizelement ein Halogenstrahler. Ein Halogenstrahler besteht hierbei aus einem Heizdraht (Wolfram oder Osmium) eingebettet in einem mit Halogengas gefluteten Glaskörper.

Andere Heizelemente, beispielsweise Heizdraht, sind denkbar und gemäß weiterer Ausführungsformen vorteilhaft, wie zu einem späteren Zeitpunkt beschrieben wird.

Ein Vorteil eines Halogenstrahlers als Heizelement ist, dass dieser innerhalb von Millisekunden sein Leistungsmaximum erreicht. Im Vergleich hierzu benötigen Heizdrähte mehrere Sekunden und Heizspiralen in Backöfen sogar bis zu zwei Minuten. Ferner weisen Halogenstrahler ein vorteilhaftes Emissionsspektrum in Bezug auf Wärmestrahlung, im Spezifischen Infrarotstrahlung, auf. So weisen gängige Halogenstrahler eine Glühtemperatur von ca. 2500 - 3200 K auf. Im Vergleich weisen Heizdraht (z.B. aus Kanthal) oder Heizspiralen eine Glühtemperatur von maximal ca. 1500 K auf. Das zum Schutz des Heizelementes verwendete zumindest eine transmittierende Element (beispielsweise auf Basis von Siliziumdioxid) hat ein übliches Transmissionsspektrum von 500 bis 2800 nm. Das Emissionsspektrum eines Halogenstrahlers liegt deutlich stärker in diesem Transmissionsbereich als das einer Heizspirale. Halogenstrahler sind dementsprechend in vorteilhafter Art und Weise als Heizelement nutzbar. Bevorzugt ist der Halogenstrahler als Niedervolt-Leuchtmittel mit einer Leistung von mindestens 300 W ausgebildet.

Gemäß verschiedener Ausführungsformen ist der zumindest eine Reflektor kuppelförmig oder als Gewölbe ausgebildet. Ein kuppelförmig ausgebildeter Reflektor fokussiert einen Großteil der Wärmestrahlung auf einen Brennpunkt oder ein Abstrahlwinkel des Großteils der Wärmestrahlung eines kuppelförmig ausgebildeten Reflektors beträgt maximal 120° . Ein als Gewölbe ausgebildeter Reflektor fokussiert einen Großteil der Wärmestrahlung auf eine Linie oder ein Abstrahlwinkel des Großteils der Wärmestrahlung eines als Gewölbe ausgebildeten Reflektor beträgt maximal 120° . Großteil meint hierbei bevorzugt mehr als 80%, bevorzugt mehr als 90% der Wärmestrahlung. Abstrahlwinkel meint hierbei den Winkel, welcher die transmittierte Wärmestrahlung nach Passieren des zumindest einen transmittierenden Elements einnimmt. In beiden Ausführungsformen beträgt der Abstrahlwinkel vorzugsweise 100° , vorzugsweise 80° , vorzugsweise 60° . Hierbei kann ein kuppelförmiger Reflektor derart ausgestaltet sein, dass die Wärmestrahlen zunächst in einem Brennpunkt fokussieren, bevor sie in Richtung des Lebensmittelproduktes auffächern. Ein bevorzugter maximaler Abstrahlwinkel des Großteils der Wärmestrahlung bestimmt den möglichen Abstand von dem zumindest einen Heizelement zu dem Lebensmittelprodukt, welcher in einer ausreichenden Hitze resultiert, um ein Überbacken des Lebensmittelproduktes noch zu ermöglichen. Umso geringer der Abstand ist, umso weiter kann der Abstrahlwinkel sein. Ein größerer Abstand ist hierbei vorteilhaft, um den Prozess des Überbackens des Lebensmittelproduktes durch den Anwender visuell erfassen und die Vorrichtung beim Erreichen eines gewünschten Ergebnisses ausschalten zu können. Ein kuppelförmiger Reflektor ist im Speziellen, aber nicht ausschließlich, in Kombination mit einem Halogenstrahler als Heizelement vorteilhaft. Hierbei zeichnet sich ein Halogenstrahler durch eine kompakte Bauweise, u.a. durch die hohen erzielten Temperaturen, aus. Eine Strahlungsemission erfolgt von einem kleinen Punkt aus, was den Einsatz eines kompakten, kuppelförmigen Reflektors ermöglicht, welcher die Strahlung bündeln und fokussiert emittieren soll. Hierbei steigert eine fokussierte und engstrahlig gerichtete Strahlung die energetisch-thermische Effizienz der handgeführten Vorrichtung zum Überbacken von Lebensmittelprodukten wesentlich. Bei hoher Strahlungsdichte auf dem Käse hat die gleichzeitige Wärmeabgabe des Käses an die Luft einen deutlich kleineren Anteil und führt so zu deutlich kürzerer Gesamtzeit für die insgesamt zu schmelzende bzw. bräunende Fläche, was die Effizienz der Vorrichtung steigert.

Im Vergleich zu einem kuppelförmigen Reflektor ist ein als Gewölbe ausgeführter Reflektor in Verbindung mit einem stabförmigen Strahler einfacher zu fertigen. Die Form eines als Gewölbe ausgeführten Reflektors kann im Wesentlichen der eines Rohrquerschnitts entsprechen, wobei ein Querschnitt des Gewölbes beispielsweise ellipsen- oder parabelförmig sein kann, um eine hohe Dichte der Wärmestrahlung, und somit ein effizientes Überbacken, zu ermöglichen. Hierbei kann der als Gewölbe ausgeführte Reflektor derart ausgestaltet sein, dass die Wärmestrahlen zunächst auf einer Linie des Gewölbes fokussieren, bevor sie in Richtung des Lebensmittelproduktes auffächern.

Vorteilhafter Weise ist der zumindest eine Reflektor aus Aluminium gefertigt. Es ist aber auch denkbar, den zumindest einen Reflektor aus einem anderen Metall und/oder Glas und/oder Keramik zu fertigen. Ferner denkbar ist, dass der zumindest eine Reflektor eine stark reflektierende Beschichtung aufweist, beispielsweise Aluminium und/oder Silber und/oder Gold. Weitere Ausgestaltungen des zumindest einen Reflektors sind denkbar. Der zumindest eine Reflektor kann direkt oder mittelbar über einen Kühlkörper mit einem als gut wärmeleitendes, metallisches Gehäuse ausgebildeten Teil des Gehäuses verbunden sein. Um das zumindest eine Heizelement vor Überhitzung zu schützen, im Speziellen bei hoher Nutzungsfrequenz, bedarf es einen Abtransport exzessiver Verlustwärme durch unvollständige Emission im Reflektor. Hierfür bildet in vorteilhafter Weise der Reflektor selbst den Kühlkörper, der in Wirkverbindung mit dem als gut wärmeleitendes, metallisches Gehäuse ausgebildeten Teil des Gehäuses der Vorrichtung zum Überbacken von Lebensmittelprodukten steht. Die Nutzung anderer wärmeleitender Materialien, beispielsweise anderer Metalle, ist denkbar. Dies ermöglicht eine effiziente Wärmeleitung von dem zumindest einen Reflektor zu dem als gut wärmeleitendes, metallisches Gehäuse ausgebildeten Teil des Gehäuses. Das metallisch ausgebildete Gehäuse verteilt über seinen relativ dicken Querschnitt die absorbierte Verlustwärme gut über die gesamte Höhe. Durch eine große Gehäuseoberfläche wird die Abwärme über Konvektion an die Umgebung abgegeben, ohne dass das Gehäuse selbst sich stark erwärmt. Ebenfalls denkbar ist eine Nutzung anderer/weiterer passiver Kühlkörper, beispielsweise Metallkörpern mit großen Querschnitten. Damit kann einer möglichen Beschädigung durch Überhitzung vorgebeugt werden. In einem einfachen Fall ist es auch möglich, das zumindest eine Heizelement sowie den zumindest einen Reflektor besonders thermisch robust auszulegen und eine Kühlung über Wärmestrahlung direkt an das Gehäuse zu ermöglichen, sofern dieses metallisch ausgebildet ist. Hierfür kann das Gehäuse optional eine dunkle Oberfläche an seiner Innenseite aufweisen. Ein Hitzeschild über dem Reflektor (zwischen Reflektor und weiteren Komponenten der Vorrichtung) ist in diesem Fall besonders wichtig, da die Kühlung über Wärmestrahlung auf einem höheren Temperaturniveau erfolgt. Zudem können Temperatursensoren und -schalter gegen übermäßige Wärmeentwicklung im Gehäuse sichern. Dieses passive System ist kostengünstiger, energieeffizienter und leiser als eine aktive Kühlung mit Lüfter. Nichtsdestotrotz ist erfindungsgemäß ein interner Lüfter zum stärkeren Kühlen des Reflektors vorgesehen, beispielsweise bei intensiver Nutzung der Vorrichtung mit vielen Grillvorgängen in kurzer Zeitfolge. Hierfür kann der zumindest eine Reflektor Lüftungsöffnungen aufweisen, welche vorzugsweise entsprechend einer Belüftungsrichtung des oder der Lüfter, beidseitig von dem zumindest einen Heizelement, angeordnet sind, sodass das zumindest eine Heizelement direkt belüftet wird.

Gemäß verschiedener Ausführungsformen ist der Halogenstrahler quer zu einer Längsachse der handgeführten Vorrichtung zum Überbacken von Lebensmittelprodukten, vorzugsweise orthogonal, in dem zumindest einen kuppelförmig oder als Gewölbe ausgebildeten Reflektor angeordnet.

Elektrische Anschlüsse des Halogenstrahlers sind außerhalb des kuppelförmig oder als Gewölbe ausgebildeten Reflektors angeordnet.

Bei Verwendung eines kuppelförmigen Reflektors verbleibt seitlich des kuppelförmigen Reflektors, auf seiner konvexen Seite, ein Freiraum, welcher zur Anordnung relevanter Bauteile der Vorrichtung nutzbar ist. Vorteilhafterweise wird der Freiraum für die elektrischen Anschlüsse des zumindest einen Heizelements in Form eines Halogenstrahlers genutzt, welcher orthogonal zur Längsachse der handgeführten Vorrichtung zum Überbacken von Lebensmittelprodukten angeordnet ist. Eine solche Anordnung, im Vergleich zu einer Anordnung parallel zur Längsausrichtung der Vorrichtung, ermöglicht es die Vorrichtung kompakter zu fertigen, da weniger Bauhöhe und Bauraum benötigt werden. Dies ist gerade im Hinblick auf eine handgeführte, mobile Vorrichtung elementar. Gleiche Ausführungen gelten für ein als Gewölbe ausgebildeten Reflektor.

Gemäß verschiedener Ausführungsformen ist das zumindest eine transmittierende Element als Filterelement ausgebildet und dafür vorgesehen, eine Transmission elektromagnetischer Strahlung unterhalb einer Wellenlänge von 600 nm signifikant zu reduzieren. Signifikant meint hierbei eine Reduktion von mehr als 80%, bevorzugt mehr als 90%, bevorzugt mehr als 95% unterhalb einer Wellenlänge von 600 nm.

Ein signifikantes Unterbinden der Transmission elektromagnetischer Strahlung unterhalb einer Wellenlänge von 600 nm dient vor allem dazu, bei Verwendung eines entsprechenden Heizelements, beispielsweise eines Halogenstrahlers, Anteile des sichtbaren Spektrums hoher Intensität, wahrnehmbar als grelles Licht, weitestgehend zu eliminieren, da dieses während einer Nutzung stören und ein Nutzungserlebnis somit negativ beeinflussen würde. Zudem wird ermöglicht, dass das Licht, welches von dem zumindest einen Heizelement emittiert wird, das transmittierende Element passiert und auf das Lebensmittelprodukt trifft, rötlich und damit farblich vergleichbar zu herkömmlichen elektronischen Grillgeräten mit ihrer gewohnten Lichtemission erscheint. Weiterhin wird sichergestellt, Wellenlängen unter 450 nm im UV-Bereich zu filtern, die gesundheitsschädlich sind. Zusätzlich soll das zumindest eine transmittierende Element gut durchlässig für längere Wellenlängen bis mindestens 2500 nm sein, um eine gute Wärmeübertragung von dem zumindest einen Heizelement auf das Lebensmittelprodukt zu gewährleisten.

Das zumindest eine als Filterelement ausgebildete transmittierende Element kann entweder als gefärbtes Glas / gefärbte Glaskeramik oder als Glas / Glaskeramik mit einer reflektierenden Beschichtung oder als Kombination aus beiden ausgeführt sein, wobei eine reflektierende Beschichtung bevorzugt dem zumindest einen Heizelement zugewandt ist. Gefärbtes Glas/Glaskeramik absorbiert im Gegensatz zu einer reflektierenden Beschichtung das ungewünschte Emissionsspektrum, zumindest teilweise. Die wichtigste Funktion des Filterelements ist es, Wellenlängen von unter 600 nm weitestgehend zu reflektieren oder zu absorbieren und längere Wellenlängen möglichst gut zu transmittieren. Für Wellenlängen über 2500 nm stellt es eine Herausforderung dar, ein entsprechendes transmittierendes Material kostengünstig zur Verfügung zu stellen. Der Energieanteil über 2500 nm ist bei Halogenstrahlern vorteilhafterweise relativ klein. Jedes transmittierende Material weist ein unterschiedliches Transmissionsspektrum im Infrarotspektrum (IR-Spektrum) auf. Das zumindest eine transmittierende Element soll möglichst viel vom nahen IR-Spektrum (0,8 - 3 µm) durchlassen. Im nahen IR-Bereich weist das zumindest eine transmittierende Element idealerweise mindestens ein ähnliches Transmissionsspektrum eines Glaskörpers des Heizsystems auf, sodass es hierüber hinaus im Hinblick auf Flächenleistung und Energieeffizienz zu keinen nennenswerten Transmissionsverlusten kommt. Das zumindest eine transmittierende Element kann wie beschrieben als im Wesentlichen einteiliger Filter (absorbierend oder reflektierend) ausgeführt sein. Alternativ kann das zumindest eine transmittierende Element auch zwei- oder mehrteilig ausgestaltet sein und beispielsweise ein separates Filterelement zwischen dem zumindest einen Heizelement und dem an einer äußeren Fläche des Gehäuses angeordneten zumindest einen transmittierenden Element aufweisen, beispielsweise wenn das Filterelement kratzempfindlich ist. Alternativ kann das zumindest eine transmittierende Element eine reflektierende Beschichtung direkt auf dem zumindest einen Heizelement umfassen, beispielsweise direkt auf dem Glaskörper eines Halogenstrahlers. Letzteres ist materialtechnisch herausfordernd, hat aber den Vorteil, dass das ungewünschte, zu filternde Lichtspektrum direkt auf kurzem Weg zurück auf das Heizelement gelangt, und diese Energie für die Aufheizung des zumindest einen Heizelements genutzt werden kann. Das erhöht die Effizienz im Gesamtsystem und spart kostenintensive Akku-Kapazität. Im Falle einer Beschichtung kann was zumindest eine transmittierende Element als Interferenzfilter oder dielektrische Beschichtung, im Speziellen dichroitischer Filter, ausgeführt sein. Eine derartige Beschichtung kann beispielsweise mit Niob-Pentoxid (Nb₂O₅) erfolgen. Der Einbau bei einseitiger Beschichtung einer Filterscheibe erfolgt mit der Beschichtung dem Heizelement zugewandt. Vorteilhaft hierbei ist, dass das blockierte Licht des zumindest einen Heizelements nicht durch das zumindest eine transmittierende Element absorbiert, sondern reflektiert wird. Dies schont das zumindest eine transmittierende Element im Hinblick auf seine thermische Belastbarkeit und vermeidet Verbrennungen bei Scheibenkontakt, wie es bei klassischem Farbglas möglich ist, welches Wärme absorbiert und sehr heiß wird. Zudem erreicht ein Teil des reflektierten Anteils rückwärts, direkt oder über den Reflektor, den Halogenstrahler, und heizt ihn mit auf, was elektrische Anschlussleistung einspart und effizienter ist.

Der Erfindungsgegenstand zielt auf eine kompakte Vorrichtung mit hoher Leistungsdichte, wobei exzessive Wärme zur Temperierung der Vorrichtung passiv oder aktiv an die Umgebung abgegeben werden kann, wie bereits beschrieben wurde. Alternativ kann die exzessive Wärme ebenfalls in Richtung Lebensmittelprodukt abgegeben, und somit zum Überbacken nutzbar gemacht werden. Hierfür weist das Thermomanagementsystem der Vorrichtung einen Lüfter und der dem Lebensmittelprodukt zugewandte Teil der Vorrichtung, demnach das zumindest eine transmittierende Element, zumindest eine erste von Luft durchströmbare Öffnung auf. Bei der beschriebenen Anordnung der Komponenten kann sodann ein Luftstrom vom Lüfter über den zumindest einen Reflektor durch die zumindest eine erste von Luft durchströmbare Öffnung des zumindest einen transmittierenden Elements an die Umgebung erfolgen. Der Luftstrom führt demnach die exzessive Wärme des zumindest einen Reflektors in Richtung des Lebensmittelprodukts ab, sodass im Wesentlichen die gesamte Wärmeenergie zum Prozessieren des Lebensmittelprodukts genutzt werden kann. Hierbei kann auch der zumindest eine Reflektor zumindest eine zweite von Luft durchströmbare Öffnung aufweisen, sodass auch das zumindest eine Heizelement von Luft umströmt wird. Ferner kann das zumindest eine als Filterelement ausgebildete transmittierende Element aus zwei Scheiben gebildet sein, welche jeweils zumindest eine gegeneinander versetzte erste von Luft durchströmbare Öffnungen aufweisen. Dies ermöglicht sowohl Luftdurchströmung als auch eine effektive Filterung des Lichts trotz der Öffnungen. Gleichzeitig wird somit ein guter Spritzschutz für die das zumindest eine Heizelement bewerkstelligt.

Eine erfindungsgemäße Ausführungsform der handgeführten Vorrichtung, welche auf die zuvor beschriebene Nutzung der gesamten Wärmeenergie abzielt, wird im Folgenden beschrieben. Hintergrund hierbei ist, dass sich eine Kombination von Wärmestrahlung und Heißluft als vorteilhaft zum Prozessieren von Lebensmittelprodukten erweist und beispielsweise eine ansprechende Bräunung beim Überbacken hervorruft.

Gemäß verschiedener Ausführungsformen ist das zumindest eine Heizelement ein Heizdraht. Der Heizdraht ist quer, vorzugsweise orthogonal, zu einer Längsachse der handgeführten Vorrichtung zum Überbacken von Lebensmittelprodukten angeordnet.

Der Heizdraht kann beispielsweise Metalle und Legierungen wie Kanthal, Chrom, Nickel, Edelstahl und/oder Carbon aufweisen.

Gemäß verschiedener Ausführungsformen ist das zumindest eine transmittierende Element röhrenförmig ausgebildet. Ein Rohrinneres ist zur Aufnahme des zumindest einen Heizelements vorgesehen. Ein röhrenförmig ausgebildetes Element kann einen einzelnen Heizdraht, aber auch zwei oder mehr Heizdrähte aufnehmen.

Ein röhrenförmig ausgebildetes transmittierendes Element ist vorteilhafterweise im Querschnitt kreisförmig, kann aber auch die Form eines nicht geschlossenen Kreises, also eines Kreisbogens haben. Andere Geometrien, beispielsweise als Vierkantrohr, sind denkbar. Röhrenförmig ausgebildete transmittierende Elemente haben gegenüber Schieben den Vorteil, dass sie robuster sind. Scheiben müssten für dieselbe Robustheit dicker sein, was jedoch die thermische Trägheit erhöht. Zudem sind die Heizdrähte darin besser gegen zum Beispiel Fettspritzer oder Berührung geschützt.

Ein wesentlicher Vorteil von einfachem Heizdraht in einem röhrenförmig ausgebildeten transmittierenden Element gegenüber einem Halogenstrahler ist, dass keine Füllung des transmittierenden Elements mit Halogengas notwendig ist. Dadurch muss das transmittierende Element seitlich nicht zwangsläufig verschlossen werden, was eine kostengünstigere und kompaktere Bauweise ermöglicht.

Vorteilhafterweise weist die Vorrichtung mehrere röhrenförmig ausgebildete transmittierende Elemente auf. Sodann können entsprechende Röhren, bei vergleichbarer Wirkfläche, einen geringeren Außendurchmesser aufweisen, was vorteilhaft in Bezug auf deren Robustheit ist. Für die notwendige Robustheit entsprechender Röhren ist ferner ein bestimmtes Wandstärke zu Durchmesser Verhältnis notwendig. Die Wandstärke sollte für die Robustheit mind. 2%, besser 5%, des Außendurchmessers betragen. Damit ist bei mehreren dünneren Röhren im Vergleich deutlich weniger Masse notwendig. Ferner ist die thermische Trägheit geringer und die Vorrichtung ist schneller auf Betriebstemperatur aber auch schneller abgekühlt. Im Sinne einer hohen Effizienz (geringe thermische Trägheit) sollte die Wandstärke maximal 10%, bevorzugt maximal 5% des Außendurchmessers betragen. Zudem sind mehrere Röhren vorteilhaft als Spritzschutz für das Innere der Vorrichtung, wobei die Oberfläche vieler Röhren mit kleinerem Durchmesser etwas ebener und leichter putzbar ist, als die Oberfläche weniger Röhren mit größerem Durchmesser. Ebenfalls wird heiße Luft gleichmäßiger über die Wirkungsfläche auf dem Gargut verteilt.

Das Thermomanagementsystem der handgeführten Vorrichtung umfasst einen Lüfter. Der Lüfter ist auf der dem zumindest einen Heizelement gegenüberliegenden Seite des zumindest einen Reflektors angeordnet oder ein Laufrad des Lüfters ist innerhalb des zumindest einen Reflektors angeordnet. Die Außenfläche des Gehäuses, an welcher das zumindest eine transmittierende Element angeordnet ist, weist zumindest eine erste von Luft durchströmbare Öffnung auf.

Ein der beschriebenen Ausführungsform entsprechender Reflektor kann als ebene Fläche oder gewölbt, aber beispielsweise auch als kastenförmige Struktur ausgebildet sein.

Eine Anordnung des Laufrads des Lüfters innerhalb des zumindest einen Reflektors meint eine Anordnung des Laufrads zwischen der reflektierenden Oberfläche des zumindest einen Reflektors und dem zumindest einen Heizelement. Beispielsweise kann das Laufrad auf der konkaven Seite eines als Gewölbe oder kuppelförmig ausgebildeten Reflektors angeordnet sein. Ein Motor des Lüfters kann außerhalb des zumindest einen Reflektors angeordnet sein, um ihn vor exzessiver Wärme zu schützen. Dies ist auch vorteilhaft für eine geringere thermische Trägheit des Heizsystems und damit schnelleren Erreichens der Betriebstemperatur.

Lufteinlassöffnungen für den Lüfter können entlang des Umfangs der Vorrichtung auf Höhe des Lüfters, bzw. des Ventilators des Lüfters, oder weiter oberhalb vorgesehen sein. Öffnungen sind auch in der oberen Stirnfläche (obere Grundfläche) möglich.

Gemäß verschiedener Ausführungsformen weist der zumindest eine Reflektor zumindest eine zweite von Luft durchströmbare Öffnung auf.

Gemäß verschiedener Ausführungsformen weist die handgeführte Vorrichtung zum Überbacken von Lebensmittelprodukten ferner zumindest einen Wärmerekuperator auf. Der zumindest eine Wärmerekuperator ist zwischen dem Lüfter und dem zumindest einen Reflektor angeordnet. Der zumindest eine Wärmerekuperator weist zumindest eine dritte von Luft durchströmbare Öffnung auf.

Der zumindest einen Wärmerekuperator ist Bestandteil des Heizsystems und mit einem Gehäuse des Heizsystems thermisch wirkverbunden. Der zumindest eine Wärmerekuperator ist ein Wärmeübertrager, beispielsweise aus Metall, ragt in den Weg der Luftströmung hinein und wird durch Luftstrom des Lüfters gekühlt. Ein entsprechender Aufbau besteht demnach aus vier luftdurchströmten Ebenen, dem Lüfter, gefolgt von dem zumindest einen Wärmerekuperator, gefolgt von dem zumindest einen Reflektor, gefolgt von dem zumindest einen transmittierenden Element.

Luft wird somit vom Lüfter kommend zunächst in der Rekuperatorebene vorgewärmt, und kühlt damit das Gehäuse des Heizsystems und mittelbar damit auch das zumindest eine Heizelement. Anschließend wird die Luft in der Ebene des zumindest einen, ebenfalls heißen, Reflektors weiter vorgewärmt. Abschließend passiert die Luft das zumindest eine röhrenförmig ausgebildete transmittierende Element, welches das zumindest eine Heizelement aufnimmt, und wird weiter abschließend erhitzt, bevor sie Richtung Lebensmittelprodukt geblasen wird. Ein derartiger Aufbau ermöglicht demnach eine effiziente Thermoregulation der Vorrichtung, wobei exzessive Wärme in Form von Heißluft dem Lebensmittelprodukt zugeführt wird.

Gemäß verschiedener Ausführungsformen sind die zumindest eine zweite von Luft durchströmbare Öffnung des zumindest einen Reflektors und die zumindest eine erste von Luft durchströmbare Öffnung der Außenfläche des Gehäuses, an welcher das zumindest eine transmittierende Element angeordnet ist und/oder die zumindest eine zweite von Luft durchströmbare Öffnung des zumindest einen Reflektors und die zumindest eine dritte von Luft durchströmbare Öffnung des zumindest einen Wärmerekuperators gegeneinander versetzt angeordnet.

Eine versetzte Anordnung entsprechender von Luft durchströmbarer Öffnungen bewirkt ein zumindest ein einmaliges, besser mehrmaliges Umlenken des Luftstroms, welcher wiederum einen effizienteren Wärmeaustrag bewirkt.

Gemäß verschiedener Ausführungsformen ist die zumindest eine erste von Luft durchströmbare Öffnung der Außenfläche des Gehäuses, an welcher das zumindest eine transmittierende Element angeordnet ist, derart ausgebildet, dass sie sowohl als Lufteinlass, als auch als Luftauslass für den Lüfter fungiert.

Alternativ zu seitlichen Lufteinlassöffnungen für den Lüfter, also entlang des Umfangs der Vorrichtung, kann auch die zumindest eine erste von Luft durchströmbare Öffnung der Außenfläche des Gehäuses als Lufteinlass dienen. Dies hat den Vorteil, dass die warme Luft, welche sich über dem Lebensmittelprodukt staut, der Vorrichtung zugeführt wird, und somit weniger Energie benötigt wird hieraus Heißluft für das Prozessieren des Lebensmittelprodukts bereitzustellen. Der Lüfter würde somit als Umluft-Heißluft-Lüfter fungieren und dementsprechend ausgebildet sein. Selbstredend reduziert dies die Kühlwirkung des Luftstroms, sodass das Thermoregulationssystem der Vorrichtung entsprechend ausgebildet sein muss (Hitzeschild, metallisches Gehäuse etc.), um eine ausreichende Kühlung zu gewährleisten.

Die handgeführte Vorrichtung kann ferner eine Verschlusskappe aufweisen, um das zumindest eine transmittierende Element abzudecken. Dies dient zum einen als Transportschutz, zum anderen zum Abstellen der Vorrichtung, während das zumindest eine transmittierende Element noch heiß ist. Hierfür kann die Verschlusskappe seitliche Öffnungen zur Abfuhr der Wärme aufweisen. Ferner kann die Verschlusskappe einen Hochsetzsteller aufweisen, um die Verschlusskappe als induktive Ladestation für die handgeführte Vorrichtung zu nutzen. Hierfür transformiert der Hochsetzsteller beispielsweise von einem USB-C 5 V Ladekabel auf > 20 V, um den zumindest einen Akkumulator zu laden.

Die handgeführte Vorrichtung zum Überbacken von Lebensmittelprodukten dient dazu, ein Lebensmittelprodukt zu Überbacken, aber auch zu Backen und zu Grillen. Ferner kann sie zum Aufwärmen von Lebensmittelprodukten, beispielsweise Pizza, genutzt werden. Hierbei zeichnet sich die handgeführte Vorrichtung durch eine schnelle und reproduzierbare Wiederholbarkeit des Vorgangs für kontinuierlichen Verzehrgenuss aus. Die handgeführte Vorrichtung ist sehr kompakt, passt leicht in einen Rucksack, ist akkubetrieben und somit mobil verwendbar. Die handgeführte Vorrichtung erlaubt demnach einen Genuss optimal frisch zubereiteter Lebensmittelprodukte sowohl im Indoor- als auch Outdoor-Bereich. Im Indoor-Bereich, beispielsweise der Gastronomie oder der eigenen Wohnung, kann sehr bequem und sicher mit einem kleinen Gerät direkt am Ess- oder Couchtisch gegrillt werden, ohne dass ein Netzkabel optisch und mechanisch (z.B. als Stolpergefahr) stört. Bei einem Outdoorerlebnis, beispielsweise als Wandersnack, am Strand oder während eines geselligen Beisammenseins im Freien, ist der große Vorteil ebenfalls die Mobilität und Unabhängigkeit von einem Netzanschluss.

Ermöglicht wird dies durch eine sehr kompakte und auf Energieeffizienz ausgelegte Bauweise, im Speziellen durch ein effizientes Heizelement mit hoher Flächenleistung [W/cm²], einer energieeffizienten Kühlung und/oder einem effizienten Lichtfilter, sodass möglichst viel aus der begrenzten Kapazität des Akkus herausgeholt wird.

Die energieeffiziente handgeführte Vorrichtung erlaubt ein schnelles Überbacken von Lebensmittelprodukten und ist somit im Alltag praktikabel. Ein ausgefeiltes Thermomanagement erlaubt den Schutz temperaturempfindlicher Bauteile durch eine gelenkte Abfuhr exzessiver Energie bei keinem oder lediglich minimalem Energieaufwand.

### Ausführung der Erfindung

Die Erfindung wird anhand mehrerer Ausführungsbeispiele näher erläutert. Hierzu zeigen
Figur 1 handgeführte Vorrichtung in schematischer Ansicht,
Figur 2 handgeführte Vorrichtung mit alternativer Bauteilanordnung,
Figur 3 handgeführte Vorrichtung mit lösbarem Energieversorgungssystem,
Figur 4 handgeführte Vorrichtung mit einem als Gewölbe ausgestaltetem Reflektor,
Figur 5 Prinzipdarstellung alternativer Ausführungsformen der handgeführten Vorrichtung,
Figur 6 alternative Ausführungsform der handgeführten Vorrichtung in schematischer Ansicht,
Figur 7 alternative Ausführungsform der handgeführten Vorrichtung in schematischer Ansicht,
Figur 8 alternative Ausführungsform der handgeführten Vorrichtung in schematischer Ansicht.

In der Beschreibung wird auf die beigefügten Zeichnungen Bezug genommen, in denen zur Veranschaulichung spezifische Ausführungsformen gezeigt sind, in denen die erfindungsgemäße Anordnung ausgeübt werden kann. In dieser Hinsicht wird eine Richtungsterminologie wie etwa "oben", "unten" usw. mit Bezug auf die Orientierung der beschriebenen Zeichnungen verwendet. Die Richtungsterminologie dient der Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

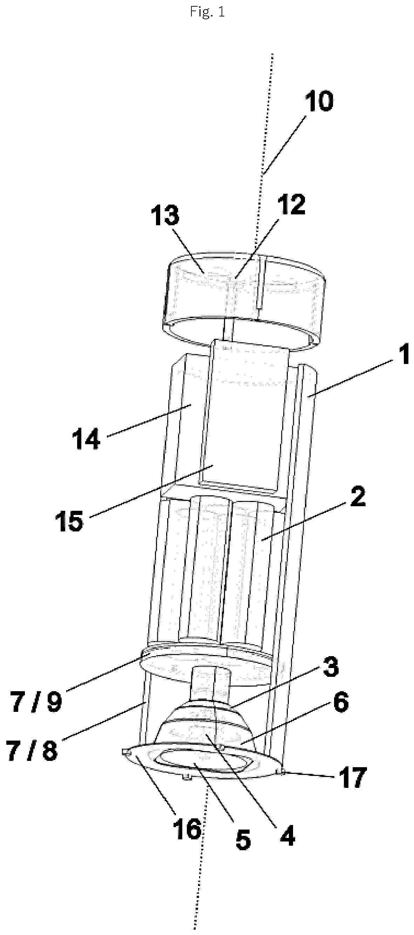

Die erfindungsgemäße handgeführte Vorrichtung zum Überbacken von Lebensmittelprodukten ist in Figur 1 dargestellt, wobei die handgeführte Vorrichtung ein Gehäuse 1, ein Energieversorgungssystem 2 und ein Heizsystem 3 aufweist. Das Energieversorgungssystem 2 weist zumindest einen Akkumulator auf und ist mit dem Heizsystem 3 elektrisch verbunden. Das Heizsystem 3 weist zumindest ein Heizelement 4, zumindest ein transmittierendes Element 5 und zumindest einen Reflektor 6 auf. Der Reflektor 6 ist derart angeordnet, dass er Wärmestrahlung des zumindest einen Heizelements 4 in Richtung des zumindest einen transmittierenden Elements 5 reflektiert. Die handgeführte Vorrichtung weist eine Länge auf, welche mindestens einer doppelten maximalen Breite der handgeführten Vorrichtung entspricht. Das zumindest eine transmittierende Element 5 ist an einer Außenfläche des Gehäuses 1 angeordnet.

Gemäß der Ausführungsform der handgeführten Vorrichtung entsprechend Figur 1 kann das zumindest eine transmittierende Element 5 an der unteren Grundfläche des Gehäuses 1 mittels einer Bodenplatte 16 gehaltert sein. Die Bodenplatte 16 kann gleichzeitig als Abstellfläche für die handgeführte Vorrichtung dienen und das zumindest eine transmittierende Element 5 vor einem Zerkratzen oder anderweitiger Beschädigung beim Abstellen schützen. Hierfür kann die handgeführte Vorrichtung zusätzlich Standfüße 17, hier vier Stück, an der Bodenplatte 16 aufweisen, welche sowohl die Bodenplatte 16 als auch das zumindest eine transmittierende Element 5 von der Abstellfläche beabstanden. Jenseits eines physischen Schutzes für das zumindest eine transmittierende Element 5 kann dies ein Abstellen der Vorrichtung auf temperaturempfindlichen Oberflächen ermöglichen, da das zumindest eine transmittierende Elemente 5, welches in Bezug auf die Außenfläche der Vorrichtung die höchste Temperatur aufweist, hierdurch mehr Abstand zur Oberfläche erhält. Gleichzeitig erlauben die Standfüße 17 eine Luftzirkulation entlang des zumindest einen transmittierenden Elements 5 und ermöglichen so eine effiziente konvektive Kühlung des zumindest einen transmittierenden Elements 5 sowie der Bodenplatte 16.

Gemäß der Ausführungsform entsprechend Figur 1 kann die handgeführte Vorrichtung eine Länge aufweisen, welche in etwa einer vierfachen Breite der Vorrichtung entspricht. Ein diesbezüglicher Formfaktor ähnelt somit dem einer handelsüblichen Pfeffermühle und erlaubt ein Verstauen der handgeführten Vorrichtung auf minimalem Raum.

Die handgeführte Vorrichtung zum Überbacken von Lebensmittelprodukten weist, wie in Figur 1 dargestellt, ferner ein Thermomanagementsystem 7 aufweisen. Das Thermomanagementsystem 7 umfasst eine aktive Kühlung durch einen Lüfter 11 (hier nicht dargestellt) und kann ferner einen Hitzeschild 9 und/oder einen Temperatursensor (hier nicht dargestellt) und/oder einen als gut wärmeleitendes, metallisches Gehäuse 8 ausgebildeten Teil des Gehäuses 1 und/oder eine gut wärmeleitende Verbindung von dem zumindest einen Reflektor 6 zu einem als gut wärmeleitendes, metallisches Gehäuse 8 ausgebildeten Teil des Gehäuses 1 umfassen. Das Hitzeschild 9 kann auf der dem zumindest einen transmittierenden Element 5 gegenüberliegenden Seite des Heizsystems 3 angeordnet sein. Entsprechend der Ausführungsform gemäß Figur 1 kann das Hitzeschild 9 zwischen dem zumindest einen Reflektor 6 des Heizsystems 3 und dem Energieversorgungssystem 2 angeordnet sein und schützt somit den Raum, welcher das Energieversorgungssystem 2 aufnimmt, vor Überhitzung. Hierfür kann ein nicht dargestellter Temperatursensor verwendet werden. Der als gut wärmeleitendes, metallisches Gehäuse 8 ausgebildete Teil des Gehäuses 1 kann lediglich den Gehäuseteil umfassen, welcher das Heizsystem 2 umgibt, oder, wie in Figur 1 dargestellt, das gesamte Gehäuse 1.

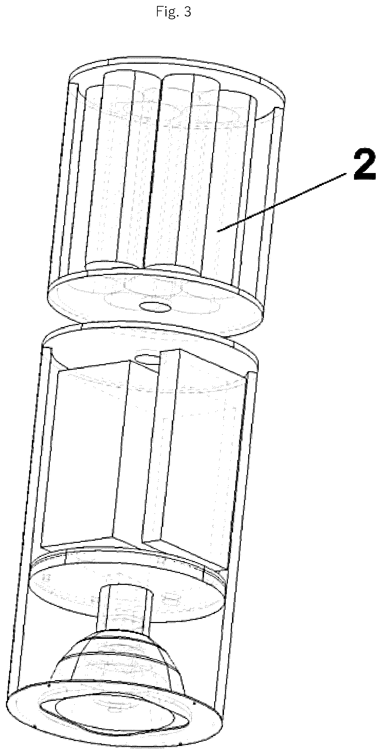

In einer vorteilhaften Ausführungsform ist das Gehäuse 1 mehrteilig ausgestaltet. Einzelne Teile des Gehäuses 1 sind hier lösbar miteinander verbunden, wie in Figur 3 ersichtlich.

Gemäß der Ausführungsformen entsprechend Figur 1 kann das Energieversorgungssystem 2 ein Batteriemanagementsystem 15, eine Ladebuchse 12, einen Hochsetzsteller oder einen Tiefsetzsteller 14 und ein Schaltelement 13 aufweisen. Ferner kann das Energieversorgungssystem 2 der Vorrichtung eine Sicherung und/oder eine Ladestandsanzeige und/oder ein Energiebereitstellungssystem aufweisen (nicht dargestellt), welcher/welche mit dem zumindest einen Akkumulator wirkverbunden ist/sind.

Das Heizsystem 3 und/oder das Energieversorgungssystem 2 und/oder das Gehäuse 1 der handgeführten Vorrichtung zum Überbacken von Lebensmittelprodukten kann/können ferner einen Temperatursensor aufweisen, welcher/welche mit dem zumindest einen Heizelement 4 wirkverbunden ist/sind. Ein entsprechendes Steuerelement oder Microcomputer (hier nicht dargestellt) kann sich beispielsweise im Deckel der Vorrichtung befinden, an welchem sich auch das Schaltelement 13 befindet, wobei es auch denkbar ist das Schaltelement 13 an der Mantelfläche der Vorrichtung zu platzieren, um so eine Auslösung der Vorrichtung mit einem Zeigefinder während des Haltens der Vorrichtung zu ermöglichen.

Das zumindest eine Heizelement 4 kann, wie in Figur 1 dargestellt, ein Halogenstrahler sein.

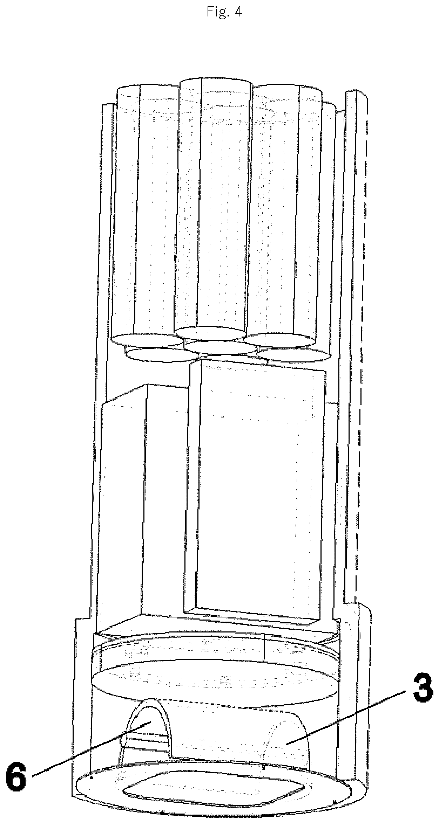

Der zumindest eine Reflektor 6 kann, wie ebenfalls in Figur 1 dargestellt, kuppelförmig ausgebildet sein und einen Großteil der Wärmestrahlung auf einen Brennpunkt fokussieren, oder ein Abstrahlwinkel des Großteils der Wärmestrahlung kann maximal 120° betragen. Der zumindest eine Reflektor 6 kann aber auch, wie in Figur 4 dargestellt, als Gewölbe ausgebildet sein und einen Großteil der Wärmestrahlung auf eine Linie fokussieren, oder der Abstrahlwinkel des Großteils der Wärmestrahlung des Gewölbes maximal 120° betragen.

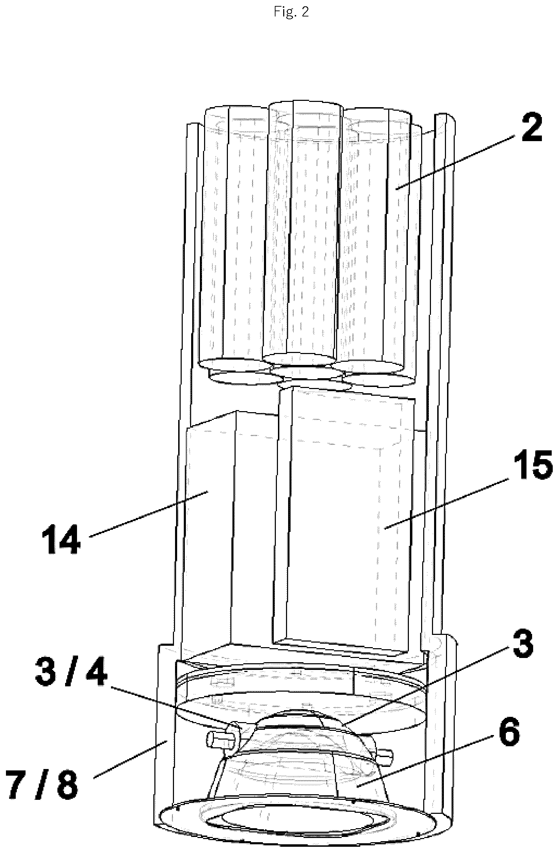

Gemäß der Ausführungsform entsprechend Figur 1, kann das zumindest eine Heizelement 4, hier in Form eines Halogenstrahlers, entlang einer Längsachse 10 der Vorrichtung angeordnet sein. Bevorzugt ist der Halogenstrahler jedoch quer, vorzugsweise orthogonal, zu einer Längsachse 10 der handgeführten Vorrichtung zum Überbacken von Lebensmittelprodukten in dem zumindest einen kuppelförmig oder als Gewölbe ausgebildeten Reflektor 6 angeordnet, wie in den Figuren 2 bzw. 4 dargestellt ist. Elektrische Anschlüsse des Halogenstrahlers sind hierbei vorteilhafterweise außerhalb des zumindest einen kuppelförmig oder als Gewölbe ausgebildeten Reflektors 6 angeordnet. Eine derartige Ausführungsform der handgeführten Vorrichtung, bei welcher die elektrischen Anschlüsse auf einer konvexen Seite des kuppelförmig ausgebildeten Reflektors 6 angeordnet sind, ist in Figur 2 ersichtlich.

Das Thermomanagementsystem 7 der handgeführten Vorrichtung umfasst erfindungsgemäß einen Lüfter 11 (hier nicht dargestellt), wobei der Lüfter 11 hier auf der dem zumindest einen Heizelement 4 gegenüberliegenden Seite des zumindest einen Reflektors 6 angeordnet ist. Die Außenfläche des Gehäuses 1, an welcher das zumindest eine transmittierende Element 5 angeordnet ist, weist zumindest eine erste von Luft durchströmbare Öffnung 18 auf (hier nicht dargestellt).

Figur 2 zeigt die handgeführte Vorrichtung zum Überbacken von Lebensmittelprodukten gemäß Figur 1, wobei die Positionierung des Energieversorgungssystems 2 und der Leistungselektronik, Tiefsetzsteller bzw. Hochsetzsteller 14 und Batteriemanagementsystem 15, vertauscht sind. Hierdurch wird der Abstand zwischen Heizsystem 3 und Energieversorgungssystems 2 maximiert, um Letzteres besser vor Überhitzung zu schützen. Ferner ermöglicht dies das Energieversorgungssystems 2 auswechselbar auszuführen, wie in Figur 3 ersichtlich. Des Weiteren unterscheidet sich die Ausführung der Vorrichtung zum Überbacken von Lebensmittelprodukten gegenüber Figur 1 darin, dass der als gut wärmeleitendes, metallisches Gehäuse 8 ausgebildete Teil des Gehäuses 1 einen größeren Durchmesser aufweist, als das Gehäuse 1. Hierdurch wird sowohl eine Konvektionsfläche zur Wärmeabfuhr, als auch eine Standfläche der Vorrichtung maximiert. Ferner weist die Ausführungsform gemäß Figur 2 einen Halogenstrahler auf, welcher orthogonal zur Längsachse 10 der handgeführten Vorrichtung zum Überbacken von Lebensmittelprodukten in dem kuppelförmig ausgebildeten Reflektor 6 angeordnet ist. Elektrische Anschlüsse des Halogenstrahlers sind hierbei auf einer konvexen Seite des kuppelförmig ausgebildeten Reflektors 6 angeordnet. Dies reduziert die notwendige Baugröße der Vorrichtung und trägt somit wesentlich zu ihrer Kompaktheit bei.

Figur 3 zeigt die handgeführte Vorrichtung zum Überbacken von Lebensmittelprodukten gemäß Figur 1, wobei die Positionierung des Energieversorgungssystems 2 und der Leistungselektronik, Tiefsetzsteller bzw. Hochsetzsteller 14 und Batteriemanagementsystem 15, vertauscht sind. Gegenüber der Ausführungsform entsprechend Figur 2 ist das Energieversorgungssystems 2 hier auswechselbar ausgestaltet. Ein entladener Akkumulator kann somit schnell durch einen vollen ersetzt werden.

Figur 4 zeigt die handgeführte Vorrichtung zum Überbacken von Lebensmittelprodukten gemäß Figur 2, wobei der Reflektor 6 als Gewölbe ausgeführt ist.

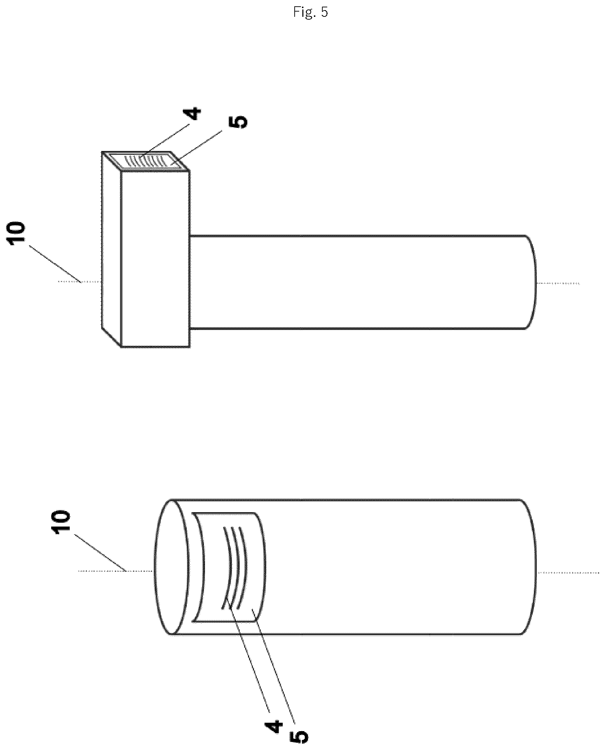

Figur 5 zeigt eine Prinzipdarstellung alternativer Ausführungsformen der handgeführten Vorrichtung zum Überbacken von Lebensmittelprodukten. Ersichtlich ist, dass das zumindest eine transmittierende Element 5 und das zumindest eine Heizelement 4 nicht an der Grundfläche der Vorrichtung angeordnet sein müssen, sondern ebenso an der Mantelfläche angeordnet sein können. Ferner kann die Vorrichtung unterschiedliche Formen aufweisen, beispielsweise der eines Hammers, wobei die Vorrichtung dennoch eine Länge aufweist, welche mindestens der doppelten maximalen Breite der handgeführten Vorrichtung entspricht.

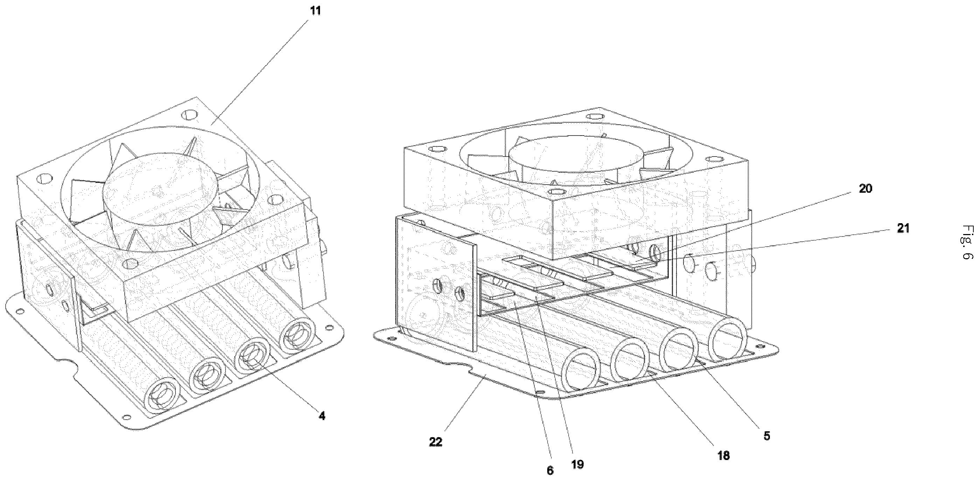

Figur 6 zeigt eine alternative Ausführungsform der handgeführten Vorrichtung, bzw. im Wesentlichen deren Heizsystem 3, in schematischer Ansicht.

Gemäß verschiedener Ausführungsformen kann das zumindest eine Heizelement 4 ein Heizdraht sein. Der Heizdraht kann quer zu einer Längsachse 10 der handgeführten Vorrichtung zum Überbacken von Lebensmittelprodukten angeordnet sein. Ferner kann das zumindest eine transmittierende Element 5, wie in Figur 6 dargestellt, röhrenförmig ausgebildet sein. Ein Rohrinneres kann zur Aufnahme des zumindest einen Heizelements 4, beispielsweise in Form eines Heizdrahts, vorgesehen sein.

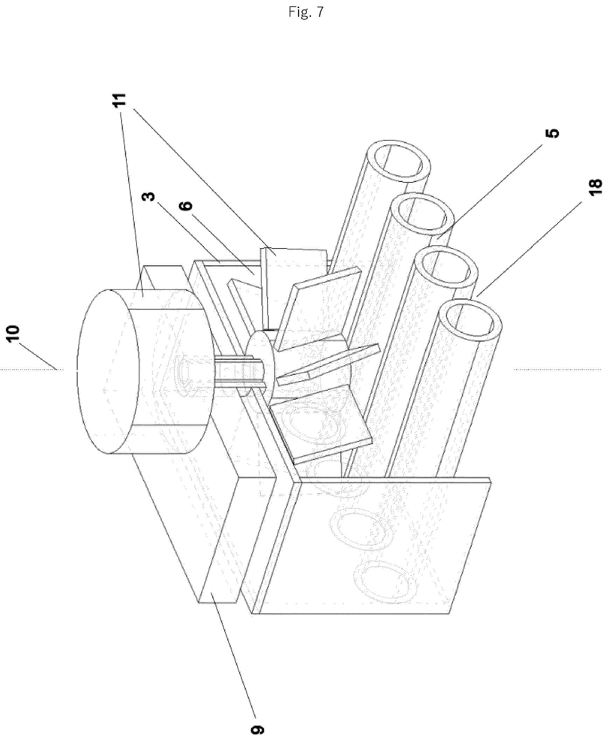

Erfindungsgemäß, und wie in Figur 6 dargestellt, umfasst das Thermomanagementsystem 7 der handgeführten Vorrichtung einen Lüfter 11. Der Lüfter 11 ist auf der dem zumindest einen Heizelement 4 gegenüberliegenden Seite des zumindest einen Reflektors 6 angeordnet (Fig. 6) oder ein Laufrad des Lüfters 11 ist innerhalb des zumindest einen Reflektors 6 angeordnet (Fig. 7). Die Außenfläche des Gehäuses 1, an welcher das zumindest eine transmittierende Element 5 angeordnet ist, weist zumindest eine erste von Luft durchströmbare Öffnung 18 auf. Wie in Figur 6 dargestellt, kann die entsprechende Außenfläche des Gehäuses 1 durch eines Spritzschutz 22 gebildet sein, welcher die zumindest eine erste von Luft durchströmbare Öffnung 18 aufweist.

Ferner kann die Vorrichtung zumindest einen Wärmerekuperator 20 aufweisen. Der zumindest eine Wärmerekuperator 20 ist zwischen dem Lüfter 11 und dem zumindest einen Reflektor 6 angeordnet und weist zumindest eine dritte von Luft durchströmbare Öffnung 21 auf. Sowohl der zumindest eine Wärmerekuperator 20, als auch der zumindest eine Reflektor 6, sind in Figur 6 zu Anschauungszwecken nur zur Hälfte dargestellt, und decken das zumindest eine transmittierende Element 5, welche das zumindest eine Heizelement 4 aufweist, vorteilhafterweise vollflächig ab.

Der zumindest eine Wärmerekuperator 20 kann zumindest teilweise als Reflektor fungieren, nämlich im Bereich der zumindest einen zweiten von Luft durchströmbaren Öffnung 19.

Gemäß einer vorteilhaften Ausführungsform sind die zumindest eine zweite von Luft durchströmbare Öffnung 19 des zumindest einen Reflektors 6 und die zumindest eine erste von Luft durchströmbare Öffnung 18 der Außenfläche des Gehäuses 1, an welcher das zumindest eine transmittierende Element 5 angeordnet ist und/oder die zumindest eine zweite von Luft durchströmbare Öffnung 20 des zumindest einen Reflektors 6 und die zumindest eine dritte von Luft durchströmbare Öffnung 21 des zumindest einen Wärmerekuperators 20 gegeneinander versetzt angeordnet. Gemäß Figur 6 sind die zumindest eine dritte von Luft durchströmbare Öffnung 21 und die zumindest eine zweite von Luft durchströmbare Öffnung 19 gegeneinander versetzt angeordnet. Ferner sind die zumindest eine zweite von Luft durchströmbare Öffnung 19 und die zumindest eine erste von Luft durchströmbare Öffnung 18 gegeneinander versetzt angeordnet.

Die zumindest eine erste von Luft durchströmbare Öffnung 18 der Außenfläche des Gehäuses 1, an welcher das zumindest eine transmittierende Element 5 angeordnet ist, kann derart ausgebildet sein, dass sie sowohl als Lufteinlass, als auch als Luftauslass für den Lüfter 11 fungiert.

Figur 7 zeigt eine weitere alternative Ausführungsform der handgeführten Vorrichtung, bzw. dessen Heizsystem 3. Der zumindest eine Reflektor 6 kann, wie hier dargestellt, aus reflektierenden Wandungen des Heizsystems 3 gebildet sein. Der Lüfter 11 kann als ein kompaktes Bauteil, oder, wie hier dargestellt, als Bauteil ausgebildet sein, dessen Komponenten an verschiedenen Orten innerhalb der handgeführten Vorrichtung angeordnet sind. Entsprechend der Ausführungsform gemäß Figur 7 kann der Lüfter 11 aus einem Laufrad und einem Motor gebildet sein, welche mittels einer Welle über eine Drehdurchführung miteinander verbunden sind. Das Laufrad kann innerhalb des zumindest einen Reflektors 6 angeordnet sein, also zwischen der reflektierenden Oberfläche des zumindest einen Reflektors 6 und dem zumindest einen Heizelement 4. Das Laufrad ist vorteilhafterweise selbst gut reflektierend und weist eine geringe Masse auf. Der Motor des Lüfters 11 ist außerhalb des Heizsystems 3 angeordnet, und durch einen Hitzeschild 9 vor exzessiver Wärme geschützt. Dies ist auch vorteilhaft für eine geringere thermische Trägheit des Heizsystems 3 und damit schnelleren Erreichens der Betriebstemperatur.

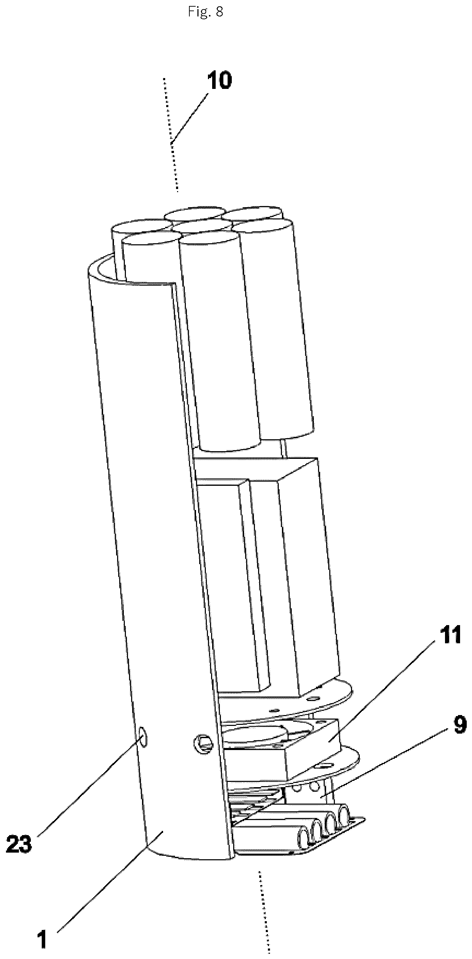

Figur 8 zeigt die alternative Ausführungsform der handgeführten Vorrichtung gemäß Figur 6 in Gesamtansicht. Das Gehäuse 1 kann im Bereich des Lüfters 11 umlaufend Lufteinlassöffnungen aufweisen, welche kreisförmig ausgebildet sein können. Es ist denkbar, die Lufteinlassöffnungen weiter oben, beispielsweise oberhalb des zumindest einen Akkumulators, anzuordnen. Sodann kann einströmende Luft auf dem Weg zwischen Lufteinlassöffnungen und Lüfter den zumindest einen Akkumulator, das Gehäuse 1 und/oder andere Bestandteile der Vorrichtung kühlen. Mit dem gleichen Ziel könnte auch der Lüfter an sich weiter oben, beispielsweise oberhalb des zumindest einen Akkumulators, angeordnet sein. Das Heizsystem 3 kann, wie dargestellt, u.a. einen partiellen seitlichen Hitzeschild 9 aufweisen. Dieser kann auch umlaufend auf der Gehäuseinnenseite angeordnet und beispielsweise aus Silikatfaser ausgebildet sein (nicht dargestellt).

### Bezugszeichen

- **1**: Gehäuse
- **2**: Energieversorgungssystem
- **3**: Heizsystem
- **4**: Heizelement
- **5**: transmittierendes Element
- **6**: Reflektor
- **7**: Thermomanagementsystem
- **8**: metallisches Gehäuse
- **9**: Hitzeschild
- **10**: Längsachse
- **11**: Lüfter
- **12**: Ladebuchse
- **13**: Schaltelement
- **14**: Tiefsetzsteller bzw. Hochsetzsteller
- **15**: Batteriemanagementsystem
- **16**: Bodenplatte
- **17**: Standfüße
- **18**: erste von Luft durchströmbare Öffnung
- **19**: zweite von Luft durchströmbare Öffnung
- **20**: Wärmerekuperator
- **21**: dritte von Luft durchströmbare Öffnung
- **22**: Spritzschutz
- **23**: Lufteinlassöffnung

## Patentansprüche

1. Handgeführte Vorrichtung zum Überbacken von Lebensmittelprodukten mittels einer Kombination von Wärmestrahlung und Heißluft aufweisend ein Gehäuse (1), ein Energieversorgungssystem (2) und ein Heizsystem (3), wobei das Energieversorgungssystem (2) zumindest einen Akkumulator aufweist und mit dem Heizsystem (3) elektrisch verbunden ist, wobei das Heizsystem (3) zumindest ein Heizelement (4), zumindest ein transmittierendes Element (5) und zumindest einen Reflektor (6) aufweist, welcher derart angeordnet ist, dass er Wärmestrahlung des zumindest einen Heizelements (4) in Richtung des zumindest einen transmittierenden Elements (5) reflektiert, wobei die handgeführte Vorrichtung eine Länge aufweist, welche mindestens einer doppelten maximalen Breite der handgeführten Vorrichtung entspricht, wobei das zumindest eine transmittierende Element (5) an einer Außenfläche des Gehäuses (1) angeordnet ist, wobei die handgeführte Vorrichtung zum Überbacken von Lebensmittelprodukten ferner ein Thermomanagementsystem (7) aufweist, wobei das Thermomanagementsystem (7) einen Lüfter (11) umfasst, wobei der Lüfter (11) auf der dem zumindest einen Heizelement (4) gegenüberliegenden Seite des zumindest einen Reflektors (6) angeordnet ist oder wobei ein Laufrad des Lüfters (11) innerhalb des zumindest einen Reflektors (6) angeordnet ist, wobei die Außenfläche des Gehäuses (1), an welcher das zumindest eine transmittierende Element (5) angeordnet ist, zumindest eine erste von Luft durchströmbare Öffnung (18) aufweist, wobei die zumindest eine erste von Luft durchströmbare Öffnung (18) als Luftauslass für den Lüfter (11) fungiert.

2. Handgeführte Vorrichtung zum Überbacken von Lebensmittelprodukten gemäß Anspruch 1, **dadurch gekennzeichnet, dass** das Thermomanagementsystem (7) ferner einen Hitzeschild (9) und/oder einen Temperatursensor und/oder einen als gut wärmeleitendes, metallisches Gehäuse (8) ausgebildeten Teil des Gehäuses (1) und/oder eine gut wärmeleitende Verbindung von dem zumindest einen Reflektor (6) zu einem als gut wärmeleitendes, metallisches Gehäuse (8) ausgebildeten Teil des Gehäuses (1) umfasst.

3. Handgeführte Vorrichtung zum Überbacken von Lebensmittelprodukten gemäß Anspruch 1 oder 2, **dadurch gekennzeichnet, dass** das Heizsystem (3) an dem zumindest einen transmittierenden Element (5) eine Leistungsdichte von mindestens 15W/cm² aufweist, wobei die handgeführte Vorrichtung einen Rauminhalt von maximal 1500 cm³ aufweist.

4. Handgeführte Vorrichtung zum Überbacken von Lebensmittelprodukten gemäß einem der vorhergehenden Ansprüchen, **dadurch gekennzeichnet, dass** das zumindest eine transmittierende Element (5) einen thermischen Wärmeausdehnungskoeffizienten von unter 6*10-6 1/K bei 300K aufweist.

5. Handgeführte Vorrichtung zum Überbacken von Lebensmittelprodukten gemäß einem der vorhergehenden Ansprüche, **dadurch gekennzeichnet, dass** das zumindest eine Heizelement (4) ein Heizdraht ist, wobei der Heizdraht quer zu einer Längsachse (10) der handgeführten Vorrichtung zum Überbacken von Lebensmittelprodukten angeordnet ist.

6. Handgeführte Vorrichtung zum Überbacken von Lebensmittelprodukten gemäß Anspruch 5, **dadurch gekennzeichnet, dass** das zumindest eine transmittierende Element (5) röhrenförmig ausgebildet ist, wobei ein Rohrinneres zur Aufnahme des zumindest einen Heizelements (4) vorgesehen ist.

7. Handgeführte Vorrichtung zum Überbacken von Lebensmittelprodukten gemäß Anspruch einem der vorhergehenden Ansprüche, ferner aufweisend zumindest einen Wärmerekuperator (20), wobei der zumindest eine Wärmerekuperator (20) zwischen dem Lüfter (11) und dem zumindest einen Reflektor (6) angeordnet ist, wobei der zumindest eine Wärmerekuperator (20) zumindest eine dritte von Luft durchströmbare Öffnung (21) aufweist.

8. Handgeführte Vorrichtung zum Überbacken von Lebensmittelprodukten gemäß einem der vorhergehenden Ansprüche, **dadurch gekennzeichnet, dass** der zumindest eine Reflektor (6) zumindest eine zweite von Luft durchströmbare Öffnung (19) aufweist.

9. Handgeführte Vorrichtung zum Überbacken von Lebensmittelprodukten gemäß Anspruch 8, **dadurch gekennzeichnet, dass** die zumindest eine zweite von Luft durchströmbare Öffnung (19) des zumindest einen Reflektors (6) und die zumindest eine erste von Luft durchströmbare Öffnung (18) der Außenfläche des Gehäuses (1), an welcher das zumindest eine transmittierende Element (5) angeordnet ist und/oder die zumindest eine zweite von Luft durchströmbare Öffnung (20) des zumindest einen Reflektors (6) und die zumindest eine dritte von Luft durchströmbare Öffnung (21) des zumindest einen Wärmerekuperators (20) gegeneinander versetzt angeordnet sind.

10. Handgeführte Vorrichtung zum Überbacken von Lebensmittelprodukten gemäß einem der vorhergehenden Ansprüche, **dadurch gekennzeichnet, dass** die zumindest eine erste von Luft durchströmbare Öffnung (18) der Außenfläche des Gehäuses (1), an welcher das zumindest eine transmittierende Element (5) angeordnet ist, derart ausgebildet ist, dass sie sowohl als Lufteinlass, als auch als Luftauslass für den Lüfter (11) fungiert.

## Claims

1. Hand-guided device for baking the top of food products by means of a combination of thermal radiation and hot air, having a housing (1), an energy supply system (2) and a heating system (3), wherein the energy supply system (2) has at least one rechargeable battery and is electrically connected to the heating system (3), wherein the heating system (3) has at least one heating element (4), at least one transmissive element (5) and at least one reflector (6), which is arranged in such a way that it reflects thermal radiation of the at least one heating element (4) in the direction of the at least one transmissive element (5), wherein the hand-guided device has a length which corresponds to at least twice the maximum width of the hand-guided device, wherein the at least one transmissive element (5) is arranged at an outer surface of the housing (1), wherein the hand-guided device for baking the top of food products also has a thermal management system (7), wherein the thermal management system (7) comprises a fan (11), wherein the fan (11) is arranged on the side of the at least one reflector (6) opposite from the at least one heating element (4), or wherein an impeller of the fan (11) is arranged within the at least one reflector (6), wherein the outer surface of the housing (1) at which the at least one transmissive element (5) is arranged has at least one first opening (18) through which air can flow, wherein the at least one first opening (18) through which air can flow acts as an air outlet for the fan (11).

2. Hand-guided device for baking the top of food products according to Claim 1, **characterized in that** the thermal management system (7) also comprises a heat shield (9) and/or a temperature sensor and/or a part of the housing (1) that is in the form of a metallic housing (8) with good heat conduction and/or a connection with good heat conduction from the at least one reflector (6) to a part of the housing (1) that is in the form of a metallic housing (8) with good heat conduction.

3. Hand-guided device for baking the top of food products according to Claim 1 or 2, **characterized in that** the heating system (3) has at the at least one transmissive element (5) a power density of at least 15 W/cm², wherein the hand-hguided device has a volume of at most 1500 cm³.

4. Hand-guided device for baking the top of food products according to one of the preceding claims, **characterized in that** the at least one transmissive element (5) has a coefficient of thermal expansion of less than 6*10-6 1/K at 300 K.

5. Hand-guided device for baking the top of food products according to one of the preceding claims, **characterized in that** the at least one heating element (4) is a heating wire, wherein the heating wire is arranged transversely in relation to a longitudinal axis (10) of the hand-guided device for baking the top of food products.

6. Hand-guided device for baking the top of food products according to Claim 5, **characterized in that** the at least one transmissive element (5) is of tubular form, wherein a tube interior is intended for receiving the at least one heating element (4).

7. Hand-guided device for baking the top of food products according to one of the preceding claims, also having at least one heat recuperator (20), wherein the at least one heat recuperator (20) is arranged between the fan (11) and the at least one reflector (6), wherein the at least one heat recuperator (20) has at least one third opening (21) through which air can flow.

8. Hand-guided device for baking the top of food products according to one of the preceding claims, **characterized in that** the at least one reflector (6) has at least one second opening (19) through which air can flow.

9. Hand-guided device for baking the top of food products according to Claim 8, **characterized in that** the at least one second opening (19) through which air can flow of the at least one reflector (6) and the at least one first opening (18) through which air can flow of the outer surface of the housing (1) at which the at least one transmissive element (5) is arranged and/or the at least one second opening (20) through which air can flow of the at least one reflector (6) and the at least one third opening (21) through which air can flow of the at least one heat recuperator (20) are arranged offset from one another.

10. Hand-guided device for baking the top of food products according to one of the preceding claims, **characterized in that** the at least one first opening (18) through which air can flow of the outer surface of the housing (1) at which the at least one transmissive element (5) is arranged is designed in such a way that it acts both as an air inlet and as an air outlet for the fan (11).

## Revendications

1. Dispositif à guidage manuel pour la cuisson de produits alimentaires au moyen d'une combinaison de rayonnement thermique et d'air chaud comportant un boîtier (1), un système d'alimentation en énergie (2) et un système de chauffage (3), le système d'alimentation en énergie (2) comportant au moins un accumulateur et étant relié électriquement au système de chauffage (3), le système de chauffage (3) comportant au moins un élément chauffant (4), au moins un élément de transmission (5) et au moins un réflecteur (6) disposé de manière à réfléchir le rayonnement thermique de l'au moins un élément chauffant (4) en direction de l'au moins un élément de transmission (5), le dispositif à guidage manuel présentant une longueur qui correspond au moins au double de la largeur maximale du dispositif à guidage manuel, l'au moins un élément de transmission (5) étant disposé au niveau d'unesurface extérieure du boîtier (1), le dispositif à guidage manuel de cuisson de produits alimentaires comportant en outre un système de gestion thermique (7), le système de gestion thermique (7) comprenant un ventilateur (11), le ventilateur (11) étant disposé sur le côté, opposé de l'au moins un élément chauffant (4), de l'au moins un réflecteur (6) ou une roue du ventilateur (11) étant disposée à l'intérieur de l'au moins un réflecteur (6), la surface extérieure du boîtier (1), au niveau de laquelle est disposé l'au moins un élément de transmission (5), comportant au moins une première ouverture (18) pouvant être traversée par de l'air, l'au moins une première ouverture (18) pouvant être traversée par de l'air agissant comme une sortie d'air pour le ventilateur (11).

2. Dispositif à guidage manuel pour la cuisson de produits alimentaires selon la revendication 1, **caractérisé en ce que** le système de gestion thermique (7) comprend en outre un bouclier thermique (9) et/ou un capteur de température et/ou une partie du boîtier (1) formée comme un boîtier métallique (8) à bonne conduction thermique et/ou une connexion à bonne conduction thermique de l'au moins un réflecteur (6) à une partie du boîtier (1) formée comme un boîtier métallique (8) à bonne conduction thermique.

3. Dispositif à guidage manuel pour la cuisson de produits alimentaires selon la revendication 1 ou 2, **caractérisé en ce que** le système de chauffage (3) présente sur l'au moins un élément de transmission (5) une densité de puissance d'au moins 15 W/cm², le dispositif à guidage manuel présentant un volume de 1500 cm³ au maximum.

4. Dispositif à guidage manuel pour la cuisson de produits alimentaires selon l'une des revendications précédentes, **caractérisé en ce que** l'au moins un élément de transmission (5) présente un coefficient de dilatation thermique inférieur à 6*10-6 1/K à 300 K.

5. Dispositif à guidage manuel pour la cuisson de produits alimentaires selon l'une des revendications précédentes, **caractérisé en ce que** l'au moins un élément chauffant (4) est un fil chauffant, le fil chauffant étant disposé transversalement à un axe longitudinal (10) du dispositif à guidage manuel pour la cuisson de produits alimentaires.

6. Dispositif à guidage manuel pour la cuisson de produits alimentaires selon la revendication 5, **caractérisé en ce que** l'au moins un élément de transmission (5) est tubulaire, un intérieur de tube étant prévu pour recevoir l'au moins un élément chauffant (4).

7. Dispositif à guidage manuel pour la cuisson de produits alimentaires selon l'une des revendications précédentes, comportant en outre au moins un récupérateur de chaleur (20), l'au moins un récupérateur de chaleur (20) étant disposé entre le ventilateur (11) et l'au moins un réflecteur (6), l'au moins un récupérateur de chaleur (20) comportant au moins une troisième ouverture (21) pouvant être traversée par de l'air.

8. Dispositif à guidage manuel pour la cuisson de produits alimentaires selon l'une des revendications précédentes, **caractérisé en ce que** l'au moins un réflecteur (6) comporte au moins une deuxième ouverture (19) pouvant être traversée par de l'air.

9. Dispositif à guidage manuel pour la cuisson de produits alimentaires selon la revendication 8, **caractérisé en ce que** l'au moins une deuxième ouverture (19) pouvant être traversée par de l'air de l'au moins un réflecteur (6) et l'au moins une première ouverture (18) pouvant être traversée par de l'air de la surface extérieure du boîtier (1), au niveau de laquelle est disposé l'au moins un élément de transmission (5), et/ou l'au moins une deuxième ouverture (20) pouvant être traversée par de l'air de l'au moins un réflecteur (6) et l'au moins une troisième ouverture (21) pouvant être traversée par de l'air de l'au moins un récupérateur de chaleur (20) sont décalées les unes par rapport aux autres.

10. Dispositif à guidage manuel pour la cuisson de produits alimentaires selon l'une des revendications précédentes, **caractérisé en ce que** l'au moins une première ouverture (18) pouvant être traversée par de l'air de la surface extérieure du boîtier (1), au niveau de laquelle est disposé l'au moins un élément de transmission (5), est formée de telle manière qu'elle peut faire office à la fois d'entrée d'air et de sortie d'air pour le ventilateur (11).
